(19) 

(11) **EP 4 082 745 B1**

(12) **EUROPEAN PATENT SPECIFICATION**

(45) Date of publication and mention of the grant of the patent:
**12.08.2026 Bulletin 2026/33**

(21) Application number: **20904322.3**

(22) Date of filing: **25.12.2020**

(51) International Patent Classification (IPC):
***B29C 45/14*** *(2006.01)* ***C08L 51/04*** *(2006.01)*
***C08L 53/00*** *(2006.01)* ***C08L 33/12*** *(2006.01)*
***C08F 285/00*** *(2006.01)* ***C08F 220/14*** *(2006.01)*

(52) Cooperative Patent Classification (CPC):
(C-Sets available)
**C08F 285/00; C08F 220/14; C08L 33/12;**
C08L 2205/02 (Cont.)

(86) International application number:
**PCT/JP2020/048691**

(87) International publication number:
**WO 2021/132557 (01.07.2021 Gazette 2021/26)**

# (54) METHACRYLIC RESIN COMPOSITION

METHACRYLHARZZUSAMMENSETZUNG

COMPOSITION DE RÉSINE MÉTHACRYLIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.12.2019 JP 2019238949**

(43) Date of publication of application:
**02.11.2022 Bulletin 2022/44**

(73) Proprietor: **Kuraray Co., Ltd.**
**Kurashiki-shi, Okayama 710-0801 (JP)**

(72) Inventors:
- **KIKUKAWA, Yusuke**
**Tainai-shi, Niigata 959-2691 (JP)**
- **KODERA, Jumpei**
**Tainai-shi, Niigata 959-2691 (JP)**

(74) Representative: **Müller-Boré & Partner Patentanwälte PartG mbB**
**Friedenheimer Brücke 21**
**80639 München (DE)**

(56) References cited:
**EP-A1- 3 450 498**
**WO-A1-2018/074550**
**WO-A1-2021/015226**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 082 745 B1

(52) Cooperative Patent Classification (CPC): (Cont.)

C-Sets
**C08F 220/14, C08F 220/14;**
**C08F 285/00, C08F 220/14;**
**C08L 33/12, C08L 51/003, C08L 51/003, C08L 53/00;**
**C08L 33/12, C08L 51/003, C08L 53/00**

## Description

### Technical Field

The present invention relates to a methacrylic resin composition. More specifically, the invention relates to a methacrylic resin composition that has excellent transparency, surface hardness, moldability, and appearance after molding.

### Background Art

Molded articles of methacrylic resin have excellent optical properties such as transparency, weather resistance, and beautiful appearance. Therefore, molded articles of methacrylic resin have been used for decorative purposes such as automobile interiors and exteriors and building materials. Methacrylic resin film, which has excellent weatherability, transparency, surface hardness, and surface smoothness, has been used as a surface protection film to protect decorative layers such as printing layers and to add a sense of luxury, depth, and like designs. In recent years, molded articles of methacrylic resin have been increasingly applied to components molded into three-dimensional (3D) shapes. Problems during 3D molding include stress whitening during molding, increased surface haze, cracking, etc. In addition to the properties described above, surface protection layers must have resistance to stress whitening, surface smoothness, plasticity, and bending resistance.

As a resin molded article having excellent resistance to whitening during molding, Patent Literature (PTL) 1 proposes a method of using rubber polymer particles having a particle size of 0.1 μm or less, and Patent Literature (PTL) 2 proposes a method of using a block copolymer as rubber particles. However, when using only crosslinked polymer particles or a block copolymer with a small particle size, it was difficult to inhibit cracking during molding while maintaining a high surface hardness.

As a film having excellent surface hardness, stress whitening resistance, and crack resistance, Patent Literature (PTL) 3 discloses a method of using crosslinked elastomer particles having two different particle sizes, one with a large particle size of 0.2 to 0.4 μm and the other with a small particle size of 0.02 to 0.15 μm. However, it is known that when elastomer particles with a large particle diameter of 0.2 μm or more are added even in a small amount, the surface smoothness is impaired and the haze of the obtained resin molded article deteriorates, and excellent properties in moldability and surface hardness that can maintain transparency while suppressing abnormality in appearance, such as whitening during molding, have not been achieved. Further, Patent Literature (PTL) 4 discloses a method of using multilayered polymer particles having a small particle size of 0.18 μm or less and a block copolymer. However, since a large amount of block copolymer is added, this method has a problem in that the surface hardness is impaired and blocking between films occurs.

### Citation List

#### Patent Literature

PTL 1: JP2001-316557A
PTL 2: WO2016/157908
PTL 3: JP2000-290397A
PTL 4: WO2013/051239

### Summary of Invention

#### Technical Problem

An object of the present invention is to provide a methacrylic resin composition and a molded article that have excellent transparency, surface smoothness, slidability, moldability, and appearance after molding and that are suitable for use in decoration.

#### Solution to Problem

As a result of research to achieve the above object, the present inventors have accomplished the present invention, including the following embodiments.

[1] A methacrylic resin composition comprising a matrix of a methacrylic resin (A) and a rubber elastomer (B) dispersed in the matrix,
the methacrylic resin composition having the following features when the total of the methacrylic resin (A) and the rubber elastomer (B) is defined as 100 mass%:

(1) the rubber elastomer (B) comprises a multilayered polymer particle (b1), a multilayered polymer particle (b2), and a block copolymer (c);
(2) the multilayered polymer particle (b1) comprises at least one rubber component layer (b1-1) (a core portion) and further comprises a hard resin component layer (b1-2) in the outermost part (a shell portion), the rubber component layer that is the closest to the shell portion has a number average particle size within the range of 0.05 μm or more and less than 0.16 μm, and the content of the multilayered polymer particle (b1) in the resin composition is more than 7.5 mass% and 42.5 mass% or less;
(3) the multilayered polymer particle (b2) comprises at least one rubber component layer (b2-1) (a core portion) and further comprises a hard resin component layer (b2-2) in the outermost part (a shell portion), the rubber component layer that is the closest to the shell portion has a number average particle size within the range of 0.16 μm or more and 0.3 μm or less, and the content of the multilayered polymer particle (b2) in the resin composition is 0.1 mass% or more and 7.5 mass% or less;
(4) the acetone-insoluble matter content of the methacrylic resin composition is more than 20 mass% and 45 mass% or less;
(5) the block copolymer (c) comprises a methacrylic polymer block (c1) and an acrylic polymer block (c2); and
(6) the content of the block copolymer (c) in the methacrylic resin composition is in the range of 0.1 mass% or more and less than 5 mass%.

[2] The methacrylic resin composition according to [1], wherein the multilayered polymer particle (b1) contains at least one rubber component layer (b1-1) between the innermost layer and the outermost layer, the rubber component layer (b1-1) comprises a copolymer of 50 to 98.99 mass% of an acrylic acid ester monomer unit, 1 to 44.99 mass% of an additional monofunctional monomer unit, and 0.01 to 10 mass% of a polyfunctional monomer unit, and the innermost layer and the outermost layer are each at least one hard resin component layer (b1-2) comprising 40 to 100 mass% of a methacrylic acid ester monomer unit and 60 to 0 mass% of an additional monomer unit.
[3] The methacrylic resin composition according to [1], wherein the multilayered polymer particle (b2) contains at least one rubber component layer (b2-1) between the innermost layer and the outermost layer, the rubber component layer (b2-1) comprises a copolymer of 50 to 98.99 mass% of an acrylic acid ester monomer unit, 1 to 44.99 mass% of an additional monofunctional monomer unit, and 0.01 to 10 mass% of a polyfunctional monomer unit, and the innermost layer and the outermost layer are each at least one hard resin component layer (b2-2) comprising 40 to 100 mass% of a methacrylic acid ester monomer unit and 60 to 0 mass% of an additional monomer unit.
[4] The methacrylic resin composition according to any one of [1] to [3], wherein the block copolymer (c) comprises at least one methacrylic polymer block (c1) and at least one acrylic polymer block (c2), and the block copolymer (c) contains the methacrylic polymer block (c1) in an amount of 30 to 60 mass% and the acrylic polymer block (c2) in an amount of 70 to 40 mass%.
[5] A molded article comprising the methacrylic resin composition of any one of [1] to [4].
[6] The molded article according to [5], which is a film.
[7] A method for producing a film, the method comprising subjecting the methacrylic resin composition of any one of [1] to [4] to melt extrusion or solution casting.

Advantageous Effect of the Invention

The molded article comprising the methacrylic resin composition according to the present invention, preferably a methacrylic melt-extrusion-molded article, has excellent transparency, surface smoothness, resistance to whitening on bending, surface hardness, crack resistance, and slidability, and is suitable for use in decoration or for use as a building material.

Description of Embodiments

Methacrylic Resin Composition

The methacrylic resin composition comprises a methacrylic resin (A) that is in the form of a matrix and a rubber elastomer (B) that is dispersed in the matrix. When the total of the methacrylic resin (A) and the rubber elastomer (B) is defined as 100 mass%, the methacrylic resin composition has the following features:

(1) the rubber elastomer (B) comprises a multilayered polymer particle (b1), a multilayered polymer particle (b2), and a block copolymer (c);
(2) the multilayered polymer particle (b1) comprises at least one rubber component layer (b1-1) (a core portion) and further comprises a hard resin component layer (b1-2) in the outermost part (a shell portion), the rubber component layer that is the closest to the shell portion has a number average particle size within the range of 0.05 μm or more and less than 0.16 μm, and the content of the multilayered polymer particle (b1) in the resin composition is more than 7.5 mass% and 42.5 mass% or less;
(3) the multilayered polymer particle (b2) comprises at least one rubber component layer (b2-1) (a core portion) and further comprises a hard resin component layer (b2-2) in the outermost part (a shell portion), the rubber component layer that is the closest to the shell portion has a number average particle size within the range of 0.16 μm or more and 0.3 μm or less, and the content of the multilayered polymer particle (b2) in the resin composition is 0.1 mass% or more and 7.5 mass% or less;
(4) the acetone-insoluble matter content of the methacrylic resin composition is more than 20 mass% and 45 mass% or less;
(5) the block copolymer (c) comprises a methacrylic polymer block (c1) and an acrylic polymer block (c2); and
(6) the content of the block copolymer (c) in the methacrylic resin composition is in the range of 0.1 mass% or more and less than 5 mass%.

The multilayered polymer particle (b1) is a particle that has a core-shell structure comprising a core portion and a shell portion. The core portion comprises a rubber component layer (b1-1) on the outermost side (or at a position that is closest to the shell portion), whereas the shell portion comprises a hard resin component layer (b1-2) in the outermost part. The core portion may consist of one rubber component layer (b1-1) or may consist of at least one rubber component layer (b1-1) and at least one hard resin component layer (b1-2). The shell portion comprises one or more hard resin component layers (b1-2). The shell portion does not comprise a rubber component layer (b1-1). For example, when the shell portion consists of two hard resin component layers (b1-2), the shell portion consists of one hard resin component layer (b1-2) that is in the outermost part and another hard resin component layer (b1-2) that is in contact with the rubber component layer (b1-1) of the core portion. When the shell portion consists of one hard resin component layer (b1-2), the hard resin component layer (b1-2) in the outermost part is in contact with the rubber component layer (b1-1) of the core portion.

The multilayered polymer particle (b2) is a particle that has a core-shell structure comprising a core portion and a shell portion. The core portion comprises a rubber component layer (b2-1) on the outermost side (or at a position that is the closest to the shell portion), whereas the shell portion comprises a hard resin component layer (b2-2) in the outermost part. The core portion may consist of one rubber component layer (b2-1) or may consist of at least one rubber component layer (b2-1) and at least one hard resin component layer (b2-2). The shell portion comprises one or more hard resin component layers (b2-2). The shell portion does not comprise a rubber component layer (b1-1). For example, when the shell portion consists of two hard resin component layers (b2-2), the shell portion consists of one hard resin component layer (b2-2) that is in the outermost part and another hard resin component layer (b2-2) that is in contact with the rubber component layer (b2-1) of the core portion. When the shell portion consists of one hard resin component layer (b2-2), the outermost hard resin component layer (b2-2) is in contact with the rubber component layer (b2-1) of the core portion.

The acetone-insoluble matter content of the methacrylic resin composition of the present invention is more than 20 mass% and 45 mass% or less, preferably more than 27 mass% and 44 mass% or less, and more preferably more than 30% and 43 mass% or less. A finely cut methacrylic resin molded article is preferably used to measure the acetone-insoluble matter content.

The acetone-insoluble matter content can be determined by using 25 mL of acetone per gram of the methacrylic resin composition, stirring at ordinary temperature for 24 hours, centrifuging to separate the precipitate as an acetone-insoluble matter content, measuring the mass after drying, and calculating the acetone-insoluble matter content according to the following formula:

Acetone-insoluble matter content (%) = (Mass of precipitate / Mass of solids content before separation) x 100

Methacrylic Resin (A)

The methacrylic resin (A) to be used in the present invention contains a structural unit derived from methyl methacrylate in a proportion of 80 mass% or more, and preferably 90 mass% or more. The methacrylic resin (A) contains a structural unit derived from a monomer other than methyl methacrylate in a proportion of 20 mass% or less, and preferably 10 mass% or less.

Examples of such monomers other than methyl methacrylate include acrylic acid esters, such as methyl acrylate, ethyl acrylate, n-propyl acrylate, isopropyl acrylate, n-butyl acrylate, isobutyl acrylate, s-butyl acrylate, t-butyl acrylate,

amyl acrylate, isoamyl acrylate, n-hexyl acrylate, 2-ethylhexyl acrylate, pentadecyl acrylate, dodecyl acrylate, phenyl acrylate, benzyl acrylate, phenoxyethyl acrylate, 2-hydroxyethyl acrylate, 2-ethoxyethyl acrylate, glycidyl acrylate, allyl acrylate, cyclohexyl acrylate, norbornenyl acrylate, and isobornyl acrylate; methacrylic acid esters other than methyl methacrylate, such as ethyl methacrylate, n-propyl methacrylate, isopropyl methacrylate, n-butyl methacrylate, isobutyl methacrylate, s-butyl methacrylate, t-butyl methacrylate, amyl methacrylate, isoamyl methacrylate, n-hexyl methacrylate, 2-ethylhexyl methacrylate, pentadecyl methacrylate, dodecyl methacrylate, phenyl methacrylate, benzyl methacrylate, phenoxyethyl methacrylate, 2-hydroxyethyl methacrylate, 2-ethoxyethyl methacrylate, glycidyl methacrylate, allyl methacrylate, cyclohexyl methacrylate, norbornenyl methacrylate, and isobornyl methacrylate; unsaturated carboxylic acids, such as acrylic acid, methacrylic acid, maleic anhydride, maleic acid, and itaconic acid, or anhydrides thereof; olefins, such as ethylene, propylene, 1-butene, isobutene, and 1-octene; conjugated dienes, such as butadiene, isoprene, and myrcene; aromatic vinyl compounds, such as styrene, $\alpha$-methylstyrene, p-methylstyrene, and m-methylstyrene; and acrylamide, methacrylamide, acrylonitrile, methacrylonitrile, vinyl acetate, vinyl pyridine, vinyl ketone, vinyl chloride, vinylidene chloride, and vinylidene fluoride.

The tacticity of the methacrylic resin (A) is not particularly limited. For example, resins that are isotactic, heterotactic, or syndiotactic, or have other tacticity, may be used.

The methacrylic resin (A) preferably has a weight average molecular weight (referred to below as "Mw (A)") of 50,000 or more and 500,000 or less, and more preferably 80,000 or more and 200,000 or less. When the Mw (A) is too low, the impact resistance and toughness of the molded article obtained using the resulting methacrylic resin composition tend to decrease. When the Mw (A) is too large, the fluidity of the methacrylic resin composition is reduced and the moldability tends to decrease.

The ratio of the weight average molecular weight Mw (A) to the number average molecular weight Mn (A) of the methacrylic resin (A), Mw (A)/Mn (A) (the ratio of the weight average molecular weight to the number average molecular weight (weight average molecular weight/number average molecular weight) may be referred to below as the "molecular weight distribution") is preferably 1.03 or more and 2.6 or less, more preferably 1.05 or more and 2.3 or less, and particularly preferably 1.2 or more and 2.0 or less. When the molecular weight distribution is too low, the moldability of the methacrylic resin composition tends to decrease. When the molecular weight distribution is too high, the impact resistance of the molded article obtained using the methacrylic resin composition is reduced, and the molded article tends to be brittle.

The Mw (A) and Mn (A) are values measured by GPC (gel permeation chromatography) and expressed in terms of standard polystyrene.

The molecular weight and molecular weight distribution of the methacrylic resin can be controlled by adjusting the types and amounts of the polymerization initiator and chain transfer agent.

The methacrylic resin (A) is obtained by polymerizing a monomer or monomer mixture containing 80 mass% or more of methyl methacrylate.

The present invention may use a commercially available product as the methacrylic resin (A). Examples of such commercially available methacrylic resins include PARAPET H1000B (MFR: 22 g/10 min (230°C, 37.3 N)), PARAPET GF (MFR: 15 g/10 min (230°C, 37.3 N)), PARAPET EH (MFR: 1.3 g/10 min (230°C, 37.3 N)), PARAPET HRL (MFR: 2.0 g/10 min (230°C, 37.3 N)), and PARAPET G (MFR: 8.0 g/10 min (230°C, 37.3 N)) (all trade names, produced by Kuraray Co., Ltd.).

Acrylic Multilayered Polymer Particle (b1)

The multilayered polymer particle (b1) is a particle that has a core-shell structure containing at least one rubber component layer (b1-1) inside (which may be simply referred to below as "(b1-1)") and further containing at least one hard resin component layer (b1-2) (which may be simply referred to below as "(b1-2)"). The core portion of the multilayered polymer particle (b1) is regarded as a "layer". The number of layers of the multilayered polymer particle (b1) is not limited as long as it is two or more. The number of the layers can be three, four, or more. Examples of the layer structure include a two-layer structure of (b1-1)-(b1-2); a three-layer structure of (b1-1)-(b1-1)-(b1-2), (b1-1)-(b1-2)-(b1-2), or (b1-2)-(b1-1)-(b1-2); and a four-layer structure of (b1-1)-(b1-2)-(b1-1)-(b1-2); and the like in the order from the center. Among these, a three-layer structure of (b1-2)-(b1-1)-(b1-2) is preferable from the viewpoint of easy of handling. In the present specification, the core portion may be referred to as the "innermost layer," and the shell portion may be referred to as the "outermost part" or the "outermost layer." A layer interposed between the innermost and outermost layers (preferably a rubber component layer) may be referred to as an "intermediate layer."

The mass ratio of the total amount of the rubber component layer(s) (b1-1) to the total amount of the hard resin component layer(s) (b1-2) ((b1-1)/(b1-2)) is in the range of 30/70 to 90/10. When the proportion of (b1-1) is lower than this range, the molded article of the resin composition of the present invention may have insufficient impact strength. When the proportion of (b1-1) is higher than this range, it is difficult to form a particle structure and melt fluidity is reduced, which may make it difficult to knead with other components and mold the resin composition of the present invention. The mass ratio ((b1-1)/(b1-2)) is preferably in the range of 30/70 to 80/20, and more preferably 40/60 to 70/30. When the resin composition

of the present invention comprises two or more rubber component layers (b1-1), the mass ratio is calculated based on the total amount of the rubber component layers (b1-1). When the resin composition of the present invention comprises two or more hard resin component layers (b1-2), the mass ratio is calculated based on the total amount of the hard resin component layers (b1-2).

The rubber component layer (b1-1) preferably comprises a copolymer of 50 to 98.99 mass% of an acrylic acid ester monomer unit, 44.99 to 10 mass% of at least one additional monofunctional monomer unit, and 0.01 to 10 mass% of a multifunctional monomer unit. The acrylic acid ester monomer unit content is more preferably 55 to 89.9 mass%, the monofunctional monomer unit content is more preferably 44.9 to 10 mass%, and the polyfunctional monomer unit content is more preferably 0.1 to 5 mass%.

If the acrylic acid ester monomer content is less than 50 mass%, the multilayered polymer particle (b1) may have insufficient rubber elasticity and the molded article obtained using the resin composition of the present invention may have insufficient impact strength. If the acrylic acid ester monomer content is more than 98.99 mass%, the particle structure may be difficult to form. If the additional monofunctional monomer unit content is less than 1 mass%, the multilayered polymer particle may have insufficient optical performance. If the additional monofunctional monomer unit content is more than 44.99 mass%, the multilayered polymer particle (b1) may have insufficient weather resistance. If the multifunctional monomer unit content is more than 10 mass%, the multilayered polymer particle (b1) may have insufficient rubber elasticity and the molded article obtained using the methacrylic resin composition of the present invention may have insufficient impact strength. If the multifunctional monomer unit content is less than 0.01 mass%, the particle structure may be difficult to form.

The starting material monomers of the rubber component layer (b1-1) are described below.

Examples of acrylic acid esters include esters of acrylic acid and a saturated aliphatic alcohol (preferably $C_1$ to $C_{18}$ saturated aliphatic alcohol), such as methyl acrylate (MA), ethyl acrylate, n-propyl acrylate, isopropyl acrylate, n-butyl acrylate (BA), isobutyl acrylate, s-butyl acrylate, t-butyl acrylate, pentyl acrylate, hexyl acrylate, octyl acrylate, 2-ethylhexyl acrylate, dodecyl acrylate, and octadecyl acrylate; esters of acrylic acid and a $C_5$ or $C_6$ alicyclic alcohol, such as cyclohexyl acrylate; esters of acrylic acid and a phenol, such as phenyl acrylate; esters of acrylic acid and an aromatic alcohol, such as benzyl acrylate; and the like. Such acrylic acid esters can be used singly or in a combination of two or more.

Examples of the additional monofunctional monomer include methacrylic acid esters, such as esters of methacrylic acid and a saturated aliphatic alcohol (preferably $C_1$ to $C_{22}$ saturated aliphatic alcohol), such as methyl methacrylate (MMA), ethyl methacrylate, n-propyl methacrylate, isopropyl methacrylate, n-butyl methacrylate, isobutyl methacrylate, pentyl methacrylate, hexyl methacrylate, octyl methacrylate, 2-ethylhexyl methacrylate, dodecyl methacrylate, myristyl methacrylate, palmityl methacrylate, stearyl methacrylate, and behenyl methacrylate; esters of methacrylic acid and a $C_5$ or $C_6$ alicyclic alcohol, such as cyclohexyl methacrylate; esters of methacrylic acid and a phenol, such as phenyl methacrylate; and esters of methacrylic acid and an aromatic alcohol, such as benzyl methacrylate; aromatic vinyl monomers, such as styrene (St), $\alpha$-methylstyrene, 1-vinylnaphthalene, 3-methylstyrene, 4-propylstyrene, 4-cyclohexylstyrene, 4-dodecylstyrene, 2-ethyl-4-benzylstyrene, 4-(phenylbutyl)styrene, and halogenated styrene; vinyl cyanide monomers, such as acrylonitrile and methacrylonitrile; and the like. Among these, styrene is preferred. Such additional monofunctional monomers can be used singly or in a combination of two or more.

Polyfunctional monomers are monomers having two or more carbon-carbon double bonds in the molecule. Polyfunctional monomers include esters of an unsaturated monocarboxylic acid, such as acrylic acid, methacrylic acid, or cinnamic acid, with an unsaturated alcohol, such as allyl alcohol or methallyl alcohol; diesters of an unsaturated monocarboxylic acid, such as those described above, with a glycol, such as ethylene glycol, butanediol, or hexanediol; and diesters of a dicarboxylic acid, such as phthalic acid, terephthalic acid, isophthalic acid, or maleic acid, with an unsaturated alcohol, such as those described above. Specific examples include allyl acrylate, methallyl acrylate, allyl methacrylate (ALMA), methallyl methacrylate, allyl cinnamate, methallyl cinnamate, diallyl maleate, diallyl phthalate, diallyl terephthalate, diallyl isophthalate, divinyl benzene, ethylene glycol di(meth)acrylate, butanediol di(meth)acrylate, and hexanediol di(meth)acrylate. Among these, allylmethacrylate (ALMA) is preferred. Polyfunctional monomers can be used singly or in a combination of two or more.

The layer (b1-2) preferably contains a copolymer of 40 to 100 mass% of a methacrylic acid ester monomer unit and 60 to 0 mass% of at least one additional monomer unit. The methacrylic acid ester monomer unit content is more preferably 50 to 99 mass%, even more preferably 60 to 99 mass%, and particularly preferably 80 to 99 mass%. The additional monomer unit content is more preferably 50 to 1 mass%, even more preferably 40 to 1 mass%, and still even more preferably 20 to 1 mass%. If the methacrylic acid ester monomer unit content is less than 40 mass%, the multilayered polymer particle (b1) may have insufficient weather resistance.

The starting material monomers of the hard resin component layer (b1-2) are described below.

Examples of the methacrylic acid ester include methyl methacrylate (MMA), ethyl methacrylate, n-propyl methacrylate, isopropyl methacrylate, n-butyl methacrylate, isobutyl methacrylate, pentyl methacrylate, hexyl methacrylate, octyl methacrylate, 2-ethylhexyl methacrylate, cyclohexyl methacrylate, dodecyl methacrylate, myristyl methacrylate, palmityl methacrylate, stearyl methacrylate, behenyl methacrylate, octadecyl methacrylate, phenyl methacrylate,

benzyl methacrylate, and the like. Among these, methyl methacrylate (MMA) is preferred.

Examples of the additional monomer include esters of acrylic acid and a saturated aliphatic alcohol (preferably $C_1$ to $C_{18}$ saturated aliphatic alcohol), such as methyl acrylate (MA), ethyl acrylate, n-propyl acrylate, isopropyl acrylate, n-butyl acrylate (BA), isobutyl acrylate, s-butyl acrylate, t-butyl acrylate, pentyl acrylate, hexyl acrylate, octyl acrylate, 2-ethylhexyl acrylate, dodecyl acrylate, and octadecyl acrylate; esters of acrylic acid and a $C_5$ or $C_6$ alicyclic alcohol, such as cyclohexyl acrylate; aromatic vinyl monomers, such as styrene (St), $\alpha$-methylstyrene, 1-vinylnaphthalene, 3-methylstyrene, 4-propylstyrene, 4-cyclohexylstyrene, 4-dodecylstyrene, 2-ethyl-4-benzylstyrene, 4-(phenylbutyl)styrene, and halogenated styrene; vinyl cyanide monomers, such as acrylonitrile and methacrylonitrile; maleimide monomers, such as maleimide, N-methylmaleimide, N-ethylmaleimide, N-propylmaleimide, N-isopropylmaleimide, N-cyclohexylmaleimide, N-phenylmaleimide, N-(p-bromophenyl)maleimide, and N-(chlorophenyl)maleimide; polyfunctional monomers mentioned as examples in the description of the layer (b1-1); and the like. Among these, acrylic acid alkyl esters, such as methyl acrylate (MA), ethyl acrylate, and n-butyl acrylate (BA), are preferred.

In the multilayered polymer particle (b1), the constituent copolymer of the layer (b1-2) that forms the outermost part preferably has a weight-average molecular weight (Mw) as measured by GPC of 20,000 to 100,000, more preferably 30,000 to 90,000, and particularly preferably 40,000 to 80,000. If the Mw is less than 20,000, the multilayered polymer particle (b1) may have insufficient rubber elasticity, which may make it difficult to form a molded article of the resin composition of the present invention. If the Mw is more than 100,000, the molded article may have reduced impact strength.

The rubber component layer (b1-1) of the multilayered polymer particle (b1) that is the closest to the outermost part (preferably in contact with the outermost layer) has a number average particle size in the range of 0.05 $\mu$m or more and less than 0.16 $\mu$m. If the number average particle size is less than 0.05 $\mu$m, the stress concentration on the multilayered polymer particle (b1) is insufficient, and the molded article may have reduced impact strength. If the average particle size is 0.16 $\mu$m or more, stress forms voids in the multilayered polymer particle (b1) portion and causes whitening. When the rubber content of the resin composition is constant, the number of particles decreases as the particle size increases beyond a specific level; this tends to increase the surface-to-surface distance between the particles and thus increases the probability of cracking in the continuous phase and thus may reduce the impact strength of the molded article. "Voids" as referred to here mean fractures that occur only inside the particles. Since the amount of energy absorbed is very small, it does not contribute very much to the development of impact resistance.

From the viewpoint of stress concentration on the multilayered polymer particle (b1), the number average particle size is preferably 0.05 $\mu$m or more and less than 0.16 $\mu$m, and more preferably 0.07 to 0.12 $\mu$m.

The average particle size of the rubber component layer (b1-1) of the multilayered polymer particle (b1) can be determined by a method in which the resin composition is measured by electron microscopy or by a method in which latex is measured by a light scattering method. When an electron microscopy method is used, the resin composition of the present invention is electronically stained with phosphotungstic acid or ruthenium tetroxide, and among the stained rubber component layers (b1-1) of the multilayered polymer particle (b1) observed under a transmission electron microscope, the average of the long axis diameter and the short axis diameter of particles in the rubber component layer (b1-1) that forms the outermost part of the multilayered polymer particle (b1) is determined. When a light scattering method is used, latex obtained by polymerization up to the rubber component layer during the polymerization of the multilayered polymer particle is sampled, and the volume average particle size of the rubber component layer can be determined by using an LA-950V2 laser diffraction/scattering particle size distribution analyzer produced by Horiba, Ltd.

In one preferred embodiment of the present invention, the method of producing the multilayered polymer particle (b1) of the present invention is not particularly limited as long as the method can obtain a multilayered polymer particle (b1) comprising a rubber component layer (b1-1) and/or a hard resin component layer (b1-2) as described above. A preferred method for producing the multilayered polymer (b1) having a three-layer structure (the core-intermediate layer-outermost layer) of the present invention is a method comprising the steps of subjecting a monomer for forming a polymer that constitutes the center core to emulsion polymerization to obtain a seed particle (b1-i), then subjecting a monomer for forming a polymer that constitutes an intermediate layer to emulsion polymerization in the presence of the seed particle (b1-i) to obtain a seed particle (b1-ii), and subjecting a monomer for forming a polymer that constitutes the outermost layer to emulsion polymerization in the presence of the seed particle (b1-ii) to obtain a seed particle (b1-iii). The multilayered polymer (b1) having a two-layer structure or a structure of four or more layers could be easily produced by a person skilled in the art with reference to the above description of the method for producing the multilayered polymer (b1) having a three-layer structure. The emulsion polymerization method or the seed emulsion polymerization method is a technique well known in the art for obtaining general multilayered polymer particles, and a detailed explanation can be obtained by referring to other literature. In the case of the preferred example described above, the seed particle (b1-i) is a single layer particle consisting of a hard resin component layer (b1-2, a core portion), the seed particle (b1-ii) is a two-layer particle consisting of a hard resin component layer (b1-2; the core) and a rubber component layer (b1-1, an intermediate layer), and the seed particle (b1-iii) is a three-layer particle consisting of a hard resin component layer (b1-2, the core), a rubber component layer (b1-1, an intermediate layer), and a hard resin component layer (b1-2, the outermost layer).

In the polymerization reaction step, the polymerization conditions are adjusted so that the constituent copolymer of the hard resin component layer (b1-2) that constitutes at least the outermost part of the multilayered polymer has an Mw of 20,000 to 100,000. The polymerization conditions are mainly adjusted by adjusting the amount of molecular weight modifier, such as alkyl mercaptan. The polymerization conditions, such as the type and amount of emulsifier used in all the polymerization reaction steps, are adjusted so that the volume average particle size up to the outermost hard resin component layer (b1-2) of the final multilayered polymer particle (b1) is in the range of 0.05 μm or more and less than 0.16 μm.

The volume average particle size up to the outermost hard resin component layer (b1-2) of the multilayered polymer particle (b1) is determined by sampling a polymer latex obtained at the time of polymerization of the multilayered polymer particle and making measurements by a light scattering method using an LA-950V2 laser diffraction/scattering particle size analyzer produced by Horiba, Ltd.

Multilayered Polymer Particle (b2)

The multilayered polymer particle (b2) is a particle that has a core-shell structure containing at least one rubber component layer (b2-1) inside (which may be simply referred to below as "(b2-1)") and further containing at least one hard resin component layer (b2-2) (which may be simply referred to below as "(b2-2)"). The core of the multilayered polymer particle (b2) is regarded as a "layer". The number of layers of the multilayered polymer particle (b2) is not limited as long as it is two or more. The number of the layers can be three, four, or more. Examples of the layer structure include a two-layer structure of (b2-1)-(b2-2); a three-layer structure of (b2-1)-(b2-1)-(b2-2), (b2-1)-(b2-2)-(b2-2), or (b2-2)-(b2-1)-(b2-2); and a four-layer structure of (b2-1)-(b2-2)-(b2-1)-(b2-2); and the like in the order from the center. Among these, a three-layer structure of (b2-2)-(b2-1)-(b2-2) is preferable from the viewpoint of ease of handling. In the present specification, the core portion may be referred to as the "innermost layer," and the shell portion may be referred to as the "outermost part" or the "outermost layer." A layer interposed between the innermost and outermost layers (preferably a rubber component layer) is referred to as an "intermediate layer."

The mass ratio of the total amount of the rubber component layer(s) (b2-1) to the total amount of the hard resin component layer(s) (b2-2) ((b2-1)/(b2-2) is in the range of 30/70 to 90/10. When the proportion of (b2-1) is lower than this range, the molded article obtained using the resin composition of the present invention may have insufficient impact strength. When the proportion of (b2-1) is more than this range, it is difficult to form a particle structure and melt fluidity is reduced, which may make it difficult to knead with other components and mold the resin composition of the present invention. The mass ratio ((b2-1)/(b2-2)) is preferably in the range of 30/70 to 80/20, and more preferably 40/60 to 70/30. When the resin composition of the present invention comprises two or more rubber component layers (b2-1), the mass ratio is calculated based on the total amount of the rubber component layers (b2-1). When the hard resin composition of the present invention comprises two or more hard resin component layers (b2-2), the mass ratio is calculated based on the total amount of the hard resin component layers (b2-2).

The layer (b2-1) preferably comprises a copolymer of 50 to 98.99 mass% of an acrylic acid ester monomer unit, 44.99 to 10 mass% of at least one additional monofunctional monomer unit, and 0.01 to 10 mass% of a multifunctional monomer unit. The acrylic acid ester monomer unit content is more preferably 55 to 89.9 mass%, the additional monofunctional monomer unit content is more preferably 44.9 to 10 mass%, and the polyfunctional monomer unit content is more preferably 0.1 to 5 mass%.

If the acrylic acid ester monomer content is less than 50 mass%, the multilayered polymer particle (b2) has insufficient rubber elasticity and the molded article obtained using the resin composition of the present invention may have insufficient impact strength. If the acrylic acid ester monomer content is more than 98.99 mass%, the particle structure may be difficult to form. If the additional monofunctional monomer unit content is less than 10 mass%, the multilayered polymer particle may have insufficient optical performance. If the additional monofunctional monomer unit content is more than 44.99 mass%, the multilayered polymer particle (b2) may have insufficient weather resistance. If the multifunctional monomer unit content is more than 10 mass%, the multilayered polymer particle (b2) has insufficient rubber elasticity and the molded article obtained using the methacrylic resin composition of the present invention may have insufficient impact strength. If the multifunctional monomer unit content is less than 0.01 mass%, it may be difficult to form the particle structure.

The starting material monomers of the rubber component layer (b2-1) can be those described in the rubber component layer (b1-1).

The layer (b2-2) preferably contains a copolymer of 50 to 100 mass% of a methacrylic acid ester monomer unit and 50 to 0 mass% of at least one additional monomer unit. The methacrylic acid ester monomer unit content is more preferably 60 to 99 mass%, and even more preferably 80 to 99 mass%. The additional monomer unit content is more preferably 40 to 1 mass%, and even more preferably 20 to 1 mass%. If the methacrylic acid ester monomer unit content is less than 50 mass%, the multilayered polymer particle (b2) may have insufficient weather resistance.

The starting material monomers of the hard resin component layer (b2-2) to be used can be those described in the

hard resin component layer (b1-2).

In the multilayered polymer particle (b2), the constituent copolymer of the layer that constitutes the outermost part (b2-2) preferably has a weight-average molecular weight (Mw) as measured by GPC of 20,000 to 100,000, more preferably 30,000 to 90,000, and particularly preferably 40,000 to 80,000. If the Mw is less than 20,000, the multilayered polymer particle (b2) may have insufficient rubber elasticity, and it may be difficult to form a molded article from the resin composition of the present invention. If the Mw is more than 100,000, the molded article may have reduced impact strength.

The rubber component layer of the multilayered polymer particle (b2) that is the closest to the outermost part (preferably in contact with the outermost layer) preferably has a number average particle size within the range of 0.16 μm or more and 0.3 μm or less, and is larger than the number average particle size of the rubber component layer of the multilayered polymer particle (b1). Therefore, the multilayered polymer particle (b2) increases the surface roughness of the resin molded article and inhibits blocking. If the number average particle size of the multilayered polymer particle (b2) is less than 0.16 μm, the increase in surface roughness is insufficient and blocking of the resin molded article is likely to occur. If the number average particle size is more than 0.3 μm, the surface roughness increases too much, resulting in poor appearance after molding.

From the viewpoint of preventing blocking and imparting slidability, the rubber component layer of the multilayered polymer particle (b2) preferably has a number average particle size within the range of 0.195 to 0.25 μm, and more preferably 0.20 to 0.23 μm.

The average particle size of the rubber component layer (b2-1) of the multilayered polymer particles (b2) can be measured in the same manner as in the measurement of the average particle size of the rubber component layer (b1-1).

In one preferred embodiment of the invention, the method for producing the multilayered polymeric particle (b2) of the present invention is the same as the method for producing the multilayered polymer particle (b1).

In the polymerization reaction step, the polymerization conditions are adjusted so that the constituent copolymer of the hard resin component layer (b2-2) that constitutes at least the outermost part has an Mw of 20,000 to 100,000. The polymerization conditions are adjusted mainly by adjusting the amount of the molecular weight modifier, such as alkyl mercaptan. The polymerization conditions, such as the type and amount of emulsifier used in all the polymerization steps, are adjusted so that the volume average particle size up to the outermost hard resin component layer (b2-2) of the final multilayered polymer particle (b2) is in the range of 0.2 to 0.35 μm.

The volume average particle size up to the outermost hard resin component layer (b2-2) of the multilayered polymer particle (b2) is determined by sampling a polymer latex obtained at the time of polymerization of the multilayered polymer particles and making measurements by a light scattering method using an LA-950V2 laser diffraction/scattering particle size analyzer produced by Horiba, Ltd.

Block Copolymer (c)

The block copolymer (c) to be used in the present invention comprises a methacrylic polymer block (c1) and an acrylic ester polymer block (c2). The block copolymer (c) may contain only one methacrylic polymer block (c1) or multiple methacrylic polymer blocks (c1). The block copolymer (c) may contain only one acrylic polymer block (c2) or multiple acrylic polymer blocks (c2). The block copolymer (c) is highly compatible with the methacrylic resin (A), multilayered polymer particle (b1), and multilayered polymer particle (b2).

From the viewpoint of the compatibility, the block copolymer (c) is preferably a block copolymer comprising 10 to 80 mass% of a polymer block (c1) mainly containing a methacrylic acid ester monomer unit, and 90 to 20 mass% of a polymer block (c2) mainly containing an acrylic acid ester monomer unit (based on the total amount of the polymer blocks (c1) and (c2) being defined as 100 mass%). In the block copolymer (c), the content of the polymer block (c1) is more preferably 20 and 70 mass%, and even more preferably 30 to 60 mass%, and the content of the polymer block (c2) is more preferably 80 to 30 mass%, and even more preferably 70 to 40 mass%.

The number of polymer blocks (c1) per molecule may be one or more. When multiple polymer blocks (c1) are present in one molecule, structural units of the polymer blocks (c1) may be the same or different in terms of formulation and molecular weight. Similarly, the number of polymer blocks (c2) per molecule may be one or more. When multiple polymer blocks (c2) are present in one molecule, structural units of the polymer blocks (c2) may be the same or different in terms of formulation and molecular weight.

The polymer block (c1) mainly contains a methacrylic acid ester monomer unit. The content of the methacrylic acid ester monomer unit in the polymer block (c1) is preferably 80 mass% or more, more preferably 90 mass% or more, particularly preferably 95 mass% or more, and most preferably 98 mass% or more. The polymer block (c1) may consist only of a methacrylic acid ester monomer unit.

The starting material monomers of the methacrylic polymer block (c1) are described below.

Examples of the methacrylic acid ester include methyl methacrylate (MMA), ethyl methacrylate, n-propyl methacrylate, isopropyl methacrylate, n-butyl methacrylate, isobutyl methacrylate, s-butyl methacrylate, t-butyl metha-

crylate, amyl methacrylate, isoamyl methacrylate, n-hexyl methacrylate, cyclohexyl methacrylate, 2-ethylhexyl methacrylate, pentadecyl methacrylate, dodecyl methacrylate, isobornyl methacrylate, phenyl methacrylate, benzyl methacrylate, phenoxyethyl methacrylate, 2-hydroxyethyl methacrylate, 2-methoxyethyl methacrylate, glycidyl methacrylate, allyl methacrylate (ALMA), and the like. Among these, methyl methacrylate (MMA) is preferred from the viewpoint of improvement in transparency and heat resistance of the metharcylic resin composition of the present invention. The methacrylic acid esters can be used singly or in a combination of two or more.

The weight-average molecular weight of the methacrylic polymer block (c1) (Mw (c)) is such that the lower limit is preferably 5,000, more preferably 8,000, even more preferably 12,000, particularly preferably 15,000, and most preferably 20,000; and the upper limit is preferably 150,000, more preferably 120,000, and particularly preferably 100,000. When the block copolymer (c) contains multiple polymer blocks (c1), the weight-average molecular weight (Mw (c1)) is the total of the Mw of the polymer blocks (c1).

In one preferred embodiment of the present invention, the weight-average molecular weight of the methacrylic polymer block (c1) of the block copolymer (c) (Mw (c1)) and the weight average molecular weight of the methacrylic resin (A) (Mw (A)) satisfy the following formula (Y).

$$0.5 \leq \mathrm{Mw}\ (A)/\mathrm{Mw}\ (c1) \leq 2.5 \qquad (Y)$$

The ratio of the weight average molecular weight Mw (A) of the methacrylic resin (A) to Mw (c1), i.e., Mw (A)/Mw (c1), is 0.5 or more and 2.5 or less, preferably 0.6 and more and 2.3 or less, and more preferably 0.7 or more and 2.2 or less. If the Mw (A)/Mw (c1) ratio is out of this range, the block copolymer (C) dispersed in the methacrylic resin (A) has a large particle size and whitening occurs when stress is applied. On the other hand, if the Mw (A)/Mw (c1) ratio is within this range, the block copolymer (C) dispersed in the methacrylic resin (A) has a small particle size, thus providing excellent resistance to stress whitening.

The content of the methacrylic polymer block (c1) in the block copolymer (C) is preferably 10 to 80 mass%, and more preferably 20 to 70 mass%, from the viewpoint of transparency, flexibility, plasticity, bending resistance, impact resistance, moldability, and surface smoothness of the molded article of the methacrylic resin composition of the present invention. When the block copolymer (C) has multiple polymer blocks (c1), the polymer block (c1) content is the total content of the polymer blocks (c1).

In one preferred embodiment of the present invention, the acrylic polymer block (c2) mainly contains an acrylic acid ester monomer unit. The content of the acrylic acid ester monomer unit in the acrylic polymer block (c2) is preferably 45 mass% or less, more preferably 50 mass% or more, even more preferably 60 mass% or more, and particularly preferably 90 mass% or more.

The starting material monomers of the acrylic polymer block (c2) are described below.

Examples of acrylic acid esters include methyl acrylate, ethyl acrylate, n-propyl acrylate, isopropyl acrylate, n-butyl acrylate (BA), isobutyl acrylate, s-butyl acrylate, t-butyl acrylate, amyl acrylate, isoamyl acrylate, n-hexyl acrylate, cyclohexyl acrylate, 2-ethylhexyl acrylate, pentadecyl acrylate, dodecyl acrylate, isobornyl acrylate, phenyl acrylate, benzyl acrylate, phenoxyethyl acrylate, 2-hydroxyethyl acrylate, 2-methoxyethyl acrylate, glycidyl acrylate, allyl acrylate, and the like. Acrylic acid esters can be used singly or in a combination of two or more.

In another preferred embodiment of the present invention, from the viewpoint of transparency of the resin composition of the present invention, the acrylic polymer block (c2) is preferably an acrylic polymer block (c2-p) containing an acrylic acid alkyl ester monomer unit and a (meth)acrylic acid aromatic hydrocarbon ester monomer unit. The content of the acrylic acid alkyl ester monomer unit in the acrylic polymer block (c2) is preferably 50 to 90 mass%, and more preferably 60 to 80 mass%; and the content of the (meth)acrylic acid aromatic hydrocarbon ester monomer unit is preferably 50 to 10 mass%, and more preferably 40 to 20 mass%. Examples of (meth)acrylic acid aromatic hydrocarbon esters include phenyl (meth)acrylate, benzyl (meth)acrylate, and phenoxyethyl acrylate.

In one preferred embodiment of the present invention, the weight average molecular weight of the acrylic polymer block (c2) (Mw (c2)) satisfies the following formula (Z), and more preferably the following formula (Z1).

$$5{,}000 \leq \mathrm{Mw}\ (c2) \leq 120{,}000 \qquad (Z)$$

$$40{,}000 \leq \mathrm{Mw}\ (c2) \leq 120{,}000 \qquad (Z1)$$

The weight-average molecular weight of the acrylic polymer block (c2), i.e., Mw (c2), is preferably such that the lower limit of the weight-average molecular weight Mw (c2) is preferably 5,000, more preferably 15,000, even more preferably 20,000, particularly preferably 30,000, and most preferably 40,000; and the upper limit of the weight-average molecular weight Mw (c2) is preferably 120,000, more preferably 110,000, and particularly preferably 100,000. If the Mw (c2) is too low, the molded article of the methacrylic resin composition of the present invention may have reduced impact

resistance. On the other hand, if the Mw (c2) is too high, the molded article of the resin composition of the present invention may have reduced surface smoothness. When the block copolymer (c) comprises multiple acrylic polymer blocks (c2), the weight average molecular weight Mw (c2) is the total amount of Mw of the multiple acrylic polymer blocks (c2).

The content of the acrylic polymer block (c2) in the block copolymer (c) is preferably 10 to 90 mass%, and more preferably 20 mass% to 80 mass%, from the viewpoint of transparency, flexibility, plasticity, bending resistance, impact resistance, moldability, and surface smoothness of the molded article of the methacrylic resin composition of the present invention. When the block copolymer (c) has multiple polymer blocks (c2), the polymer block (c2) content is the total content of the polymer blocks (c2).

The bonding form of the methacrylic polymer block (c1) and the acrylic polymer block (c2) in the block copolymer (c) is not particularly limited. A diblock copolymer having a (c1)-(c2) structure and a triblock copolymer having a (c1)-(c2)-(c1) structure are particularly preferred.

The block copolymer (c) may have functional groups, if necessary, such as hydroxyl groups, carboxyl groups, acid anhydride groups, and amino groups, in the molecular chain and/or at ends of the molecular chain.

The weight-average molecular weight (Mw (c)) of the block copolymer (c) is 32,000 to 300,000, preferably 40,000 to 250,000, more preferably 45,000 to 230,000, and particularly preferably 50,000 to 200,000. When the Mw (c) falls within this range, unmelted matter at the time of melt kneading of starting materials in the production of the resin composition, which is responsible for defect formation in a molded article, can be reduced to a very small amount.

The block copolymer (c) preferably has a ratio of the weight-average molecular weight (Mw (c)) to the number-average molecular weight (Mn (c)) (Mw (c)/Mn (c)) in the range of 1.0 to 2.0, and more preferably 1.0 to 1.6. When the Mw (c)/Mn (c) ratio falls within this range, unmelted matter at the time of melt kneading of starting materials in the production of the resin composition, which is responsible for defect formation in molded articles, can be reduced to a very small amount.

The refractive index of the block copolymer (c) is not particularly limited and is preferably 1.485 to 1.495, and more preferably 1.487 to 1.493. When the refractive index falls within this range, the thermoplastic resin composition of the present disclosure has high transparency. In the present specification, "refractive index" means a value measured at a wavelength of 587.6 nm (d-line).

The method for producing the block copolymer (c) is not particularly limited, and a method comprising subjecting each polymer block to living polymerization is generally used. A particularly preferable living polymerization method is a method comprising performing anionic polymerization in the presence of an organoaluminum compound using an organic alkali metal compound as a polymerization initiator. This is because the method can produce the block copolymer (c) with high purity and easily control the formulation and molecular weight of each block, and is economical.

In the step of mixing the methacrylic resin (A) and the block copolymer (c), the acrylic multilayered polymer particle (b1) and the acrylic multilayered polymer particle (b2) of the present invention are added and kneaded to thereby obtain a methacrylic resin composition for producing a methacylic melt-extrusion-molded article that has excellent transparency, surface smoothness, resistance to whitening on bending, surface hardness, bendability, and slidability.

The methacrylic resin (A), the multilayered polymer particle (b1), the multilayered polymer particle (b2), and the block copolymer (c) can be mixed by any order.

The kneading can be performed by a known method, such as a method of kneading using a batch kneader such as a Banbury mixer, a pressure kneader, or a Brabender Plastograph, or a continuous kneader such as a single-screw extruder, a twin-screw extruder, or a multi-screw extruder. Alternatively, a method in which after a high-concentration master pellet has been produced by the above method, the pellet is diluted and the diluted pellet is melt-kneaded can also be used. From the viewpoint of productivity, the single-screw method or the twin-screw method is preferable. In particular, single-screw extruders are preferred because of their low shear energy given to the resin composition.

In the methacrylic resin composition of the present invention, the total amount of the multilayered polymer particle (b1), the multilayered polymer particle (b2), and the block copolymer (c) (the total amount of the rubber elastomer (B)) is in the range of 15 to 55 mass%, preferably 20 to 50 mass%, and more preferably 25 to 45 mass%. If the total amount of the multilayered polymer particle (b1), the multilayered polymer particle (b2), and the block copolymer (c) is less than 15 mass%, the impact strength deteriorates. If the total amount is more than 55 mass%, the stiffness deteriorates.

Among these, the content of the multilayered polymer particle (b2) is 0.1 to 7.5 mass%, and more preferably 0.5 to 7.0 mass%, based on the methacrylic resin composition. If the content is less than 0.1 mass%, slidability is not exhibited. If the content exceeds 7.5 mass%, the number of cracks caused by stress concentration around the multilayered polymer particle (b2) increases, resulting in stress whitening.

The content of the block copolymer (c) is 0.1 mass% or more and less than 5 mass%, and more preferably 0.5 to 4.5 mass%, based on the methacrylic resin composition. If the content is less than 0.1 mass%, no bending resistance is exhibited. If the content is 5 mass% or more, the dispersed particle size of the block copolymer (c) increases, which causes an increase in haze and whitening on bending.

In the methacrylic resin composition of the present invention, the ratio of the content of the acrylic polymer block (c2) to the total rubber content of the rubber component layer (b1-1) of the multilayered polymer particle (b1), the rubber component layer (b2-1) of the multilayered polymer particle (b2), and the acrylic polymer block (c2) is in the range of 1 to 25

mass%, preferably in the range of 3 to 23 mass%, and more preferably in the range of 5 to 20 mass%. When the ratio of the content of the acrylic polymer block (c2) to the rubber content is in the range of 1 to 25 mass%, the multilayered polymer particle and the block copolymer produce a synergistic effect to achieve excellent impact strength.

The methacrylic resin composition of the present invention may contain other polymers as required, in addition to the methacrylic resin (A), the multilayered polymer particle (b1), the multilayered polymer particle (b2), and the block copolymer (c), as long as the effect of the present invention is not impaired. Examples of such other polymers include olefin resins, such as polyethylene, polypropylene, polybutene-1, poly-4-methylpentene-1, and polynorbornene; ethylene ionomers; styrene resins, such as polystyrene, styrene-maleic anhydride copolymers, high-impact polystyrene, AS resin, ABS resin, AES resin, AAS resin, ACS resin, and MBS resin; methyl methacrylate-styrene copolymers; ester resins, such as polyethylene terephthalate and polybutylene terephthalate; amide resins, such as nylon 6, nylon 66, and polyamide elastomers; other thermoplastic resins, such as polyphenylene sulfide, polyether ether ketone, polysulfone, polyphenylene oxide, polyimide, polyetherimide, polycarbonate, polyvinyl chloride, polyvinylidene chloride, polyvinylidene fluoride, polyvinyl alcohol, ethylene-vinyl alcohol copolymers, polyacetal, and phenoxy resins; thermosetting resins, such as phenolic resins, melamine resins, silicone resins, and epoxy resins; polyurethane; modified polyphenylene ether; silicone-modified resins; acrylic rubber and silicone rubber; styrene thermoplastic elastomers, such as SEPS, SEBS, and SIS; and olefin rubbers, such as IR, EPR, and EPDM. Such additional polymers can be used singly or in a combination of two or more.

The methacrylic resin composition and the molded article of the present invention may contain various additives, if necessary. Examples of such additives include antioxidants, thermal degradation inhibitors, ultraviolet absorbers, light stabilizers, lubricants, mold release agents, polymer processing aids, antistatic agents, flame retardants, dyes or pigments, delusterants, agglutination inhibitors, impact resistance modifiers, phosphors, and the like. The contents of such additives can be appropriately set to any range as long as the effects of the present invention are not impaired. For example, it is preferable that the antioxidant content is 0.01 to 1 part by mass, the ultraviolet absorber content is 0.01 to 3 parts by mass, the light stabilizer content is 0.01 to 3 parts by mass, the lubricant content is 0.01 to 3 parts by mass, the content of the dye or pigment is 0.01 to 3 parts by mass, and the content of the agglutination inhibitor is 0.001 to 1 parts by mass, per 100 parts by mass of the methacrylic resin composition. Other additives can also be added in an amount of 0.01 to 3 parts by mass.

Antioxidants per se are effective for preventing oxidation degradation of resin in the presence of oxygen. Examples of antioxidants include phosphorus-based antioxidants, phenolic antioxidants, sulfur-based antioxidants, amine-based antioxidants, and the like. Among these, from the viewpoint of the effect of preventing degradation of optical characteristics due to staining, phosphorus-based antioxidants and phenolic antioxidants are preferable, and use of a phenolic antioxidant alone or combined use of a phosphorus-based antioxidant and a phenolic antioxidant is more preferable. When the phosphorus-based antioxidant and the phenolic antioxidant are used in combination, the molar ratio of the phosphorus-based antioxidant to the phenolic antioxidant is preferably in the range of 0.2/1 to 2/1, and more preferably 0.5/1 to 1/1.

Preferred examples of phosphorus-based antioxidants include 2,2-methylenebis(4,6-d-t-butylphenyl)octyl phosphite (ADK STAB HP-10; produced by Adeka Corporation), tris(2,4-di-t-butylphenyl)phosphite (IRGAFOS 168; produced by BASF Japan Ltd.), 3,9-bis(2,6-di-t-butyl-4-methylphenoxy)-2,4,8,10-tetraoxa-3,9-diphosphaspiro[5.5]undecane (ADK STAB PEP-36; produced by Adeka Corporation), and the like.

Preferred examples of phenolic antioxidants include pentaerythrityl-tetrakis[3-(3,5-di-t-butyl-4-hydroxyphenyl) propionate] (IRGANOX 1010; produced by BASF Japan Ltd.) and octadecyl-3-(3,5-di-t-butyl-4-hydroxyphenyl)propionate (IRGANOX 1076; produced by BASF Japan Ltd.).

Preferred examples of sulfur antioxidants include dilauryl 3,3'-thiodipropionate, distearyl 3,3'-thiodipropionate, pentaerythritol tetrakis(3-laurylthiopropionate), and the like.

Preferable examples of amine antioxidants include octylated diphenylamine and the like.

Thermal degradation inhibitors scavenge polymer radicals generated upon exposure to a high temperature under substantially oxygen-free conditions and can thereby prevent resin from thermal degradation. Preferred examples of such thermal degradation inhibitors include 2-t-butyl-6-(3'-t-butyl-5'-methyl-hydroxybenzyl)-4-methylphenylacrylate (Sumilizer GM; produced by Sumitomo Chemical Co., Ltd.) and 2,4-di-t-amyl-6-(3',5'-di-t-amyl-2'-hydroxy-$\alpha$-methylbenzyl)phenylacrylate (Sumilizer GS; produced by Sumitomo Chemical Co., Ltd.).

Ultraviolet absorbers are compounds that have ability to absorb ultraviolet rays and that are considered to function to mainly convert light energy to heat energy. Examples of such ultraviolet absorbers include benzophenones, benzotriazoles, triazines, benzoates, salicylates, cyanoacrylates, oxalic anilides, malonic acid esters, formamidines, and the like. Among these, benzotriazoles and triazines are preferred. Such ultraviolet absorbers can be used singly or in a combination of two or more.

Benzotriazoles are highly effective for inhibiting reduction of optical characteristics, such as staining due to ultraviolet irradiation, and are therefore suitable for application of the methacrylic resin composition of the present invention to an optical purpose. Preferred examples of benzotriazoles include 4-methyl-2-(2H-benzotriazol-2-yl)phenol

(trade name: JF-77; produced by Johoku Chemical Co., Ltd.), 2-(2H-benzotriazol-2-yl)-4-(1,1,3,3-tetramethylbutyl) phenol (trade name: TINUVIN 329; produced by BASF Japan Ltd.), 2-(2H-benzotriazol-2-yl)-4,6-bis(1-methyl-1-phenylethyl)phenol (trade name: TINUVIN 234; produced by BASF Japan Ltd.), 2,2'-methylenebis[6-(2H-benzotriazol-2-yl)-4-t-octylphenol] (ADK STAB LA-31; produced by ADEKA Corporation), and the like.

When a wavelength around 380 nm is to be efficiently absorbed, triazine ultraviolet absorbers are preferably used. Examples of such ultraviolet absorbers include 2,4,6-tris(2-hydroxy-4-hexyloxy-3-methylphenyl)-1,3,5-triazine (ADK STAB LA-F70; produced by ADEKA Corporation), and its analog hydroxyphenyltriazine-based ultraviolet absorbers (TINUVIN 477 and TINUVIN 460; both produced by BASF Japan Ltd.); and the like.

Light stabilizers are compounds that are considered to function to scavenge radicals generated mainly by oxidation due to light. Preferred examples of light stabilizers include hindered amines such as compounds having a 2,2,6,6-tetraalkylpiperidine backbone. Examples include bis(2,2,6,6-tetramethyl-4-piperidyl)sebacate (ADK STAB LA-77Y; produced by ADEKA Corporation).

Lubricants are compounds that are considered to improve, for example, mold release properties and processability by adjusting lubricity between a resin and a metal surface and preventing adhesion or sticking. Examples of lubricants include higher alcohols, hydrocarbons, fatty acids, fatty acid metal salts, aliphatic amides, fatty acid esters, and the like. Among these, from the viewpoint of compatibility with the methacrylic resin composition of the present invention, $C_{12}$-$C_{18}$ aliphatic monohydric alcohols and aliphatic amides are preferred, and aliphatic amides are more preferred. Aliphatic amides are classified into saturated aliphatic amides and unsaturated aliphatic amides. Unsaturated aliphatic amides are more preferable because slipping effects by adhesion prevention can be expected. Examples of unsaturated aliphatic amides include N,N'-ethylenebisoleic acid amide (Slipax O; produced by Nippon Kasei Co., Ltd.) and N,N'-dioleyladipic acid amide (Slipax ZOA; produced by Nippon Kasei Co., Ltd.).

Examples of release agents include higher alcohols, such as cetyl alcohol and stearyl alcohol; glycerin higher fatty acid esters, such as stearic acid monoglyceride and stearic acid diglyceride; and the like. In the present invention, a combination of a higher alcohol and a glycerin fatty acid monoester is preferably used as a release agent. When a higher alcohol and a glycerin fatty acid monoester are used in combination, their ratio is not particularly limited. The mass ratio of the higher alcohol to the glycerin fatty acid monoester to be used is preferably in the range of 2.5:1 to 3.5:1, and more preferably 2.8:1 to 3.2:1.

Polymer processing aids are compounds that exhibit effects on thickness accuracy and thinness of the obtained film when a methacrylic resin composition is molded. Polymer processing aids are polymer particles having a particle size of 0.05 to 0.5 $\mu$m and are usually produced by an emulsion polymerization method.

Examples of antistatic agents include alkyl sulfonates, such as sodium heptyl sulfonate, sodium octyl sulfonate, sodium nonyl sulfonate, sodium decyl sulfonate, sodium dodecyl sulfonate, sodium cetyl sulfonate, sodium octadecyl sulfonate, sodium diheptyl sulfonate, potassium heptyl sulfonate, potassium octyl sulfonate, potassium nonyl sulfonate, potassium decyl sulfonate, potassium dodecyl sulfonate, potassium cetyl sulfonate, potassium octadecyl sulfonate, potassium diheptyl sulfonate, lithium heptyl sulfonate, lithium octyl sulfonate, lithium nonyl sulfonate, lithium decyl sulfonate, lithium dodecyl sulfonate, lithium cetyl sulfonate, lithium octadecyl sulfonate, and lithium diheptyl sulfonate; and the like.

Examples of flame retardants include metal hydrates having hydroxyl groups or crystalline water, such as magnesium hydroxide, aluminum hydroxide, aluminum hydrated silicate, magnesium hydrated silicate, and hydrotalcite; phosphoric acid compounds, such as polyphosphoric amine and phosphoric acid esters; silicon compounds; and the like. Phosphoric acid ester flame retardants, such as trimethyl phosphate, triethyl phosphate, tripropyl phosphate, tributyl phosphate, tripentyl phosphate, trihexyl phosphate, tricyclohexyl phosphate, triphenyl phosphate, tricresyl phosphate, trixilenyl phosphate, dimethyl ethyl phosphate, methyl dibutyl phosphate, ethyl dipropyl phosphate, and hydroxyphenyl diphenyl phosphate are preferred.

Examples of dyes and pigments include red organic pigments, such as para red, fire red, pyrazolone red, thioindigo red, and perylene red; blue organic pigments, such as cyanine blue and indanthrene blue; and green organic pigments, such as cyanine green and naphthol green. These pigments can be used singly or in a combination with two or more.

Examples of delusterants include glass microparticles, polysiloxane-based crosslinked microparticles, crosslinked-polymer microparticles, mica, talc, calcium carbonate, barium sulfate, and the like. The copolymer of the present invention preferably does not contain any acid generator.

Examples of agglutination inhibitors include fatty acids, such as stearic acid and palmitic acid; fatty acid metal salts, such as calcium stearate, zinc stearate, magnesium stearate, potassium palmitate, and sodium palmitate; waxes, such as polyethylene wax, polypropylene wax, and montanic acid wax; low-molecular-weight polyolefins, such as low-molecular-weight polyethylene and low-molecular-weight polypropylene; acrylic resin powder; polyorganosiloxane, such as dimethylpolysiloxane; amide resin powders, such as octadecylamine, alkyl phosphate, fatty acid esters, and ethylene bis-stearylamide; fluororesin powders, such as ethylene tetrafluoride resins; and molybdenum disulfide powder, silicone resin powder, silicone rubber powder, silica, and the like.

Examples of phosphors include fluorescent pigments, fluorescent dyes, fluorescent white dyes, fluorescent whitening agents, fluorescent bleaching agents, and the like.

When the methacrylic resin composition of the present invention contains one or more additional polymers and/or additives, these components may be added during polymerization of the methacrylic resin (A) and/or the multilayered polymer particle (b1) and/or the multilayered polymer particle (b2) and/or the block copolymer (c)), or may be added during or after mixing of the methacrylic resin (A) and/or the multilayered polymer particle (b1) and/or the multilayered polymer particle (b2) and/or the block copolymer (c)).

The molded article containing the methacrylic resin composition of the present invention can be obtained by molding using a molding method and a molding device that are commonly used for thermoplastic polymers. The molded article can be obtained, for example, by injection molding, extrusion molding, compression molding, blow molding, calendaring molding, vacuum molding, and like molding methods that comprise heating and melting, and solution casting methods. Among these, the melt extrusion molding method is preferable in terms of controlling the dispersed phase of the block copolymer (c) of the present invention.

The molded article comprising the methacrylic resin composition of the present invention is also useful as a film. The methacrylic resin composition of the present invention is well processed, for example, by a usual melt extrusion method, such as inflation, T-die extrusion, or calendering, or even solution casting. If necessary, it is also possible to obtain a film with excellent surface properties by simultaneously bringing both sides of the film into contact with a roll or a metal belt, in particular, by simultaneously bringing both sides of the film into contact with a roll or a metal belt heated to the glass transition temperature or higher. It is also possible to modify the film in accordance with the purpose by subjecting the film to laminate molding or biaxial stretching. Of these, the T-die extrusion method is particularly preferred. The thickness of the film is preferably 20 to 200 μm, and more preferably 30 to 100 μm.

The film can have improved resistance to cracking due to bending by controlling the acrylic polymer block (c2) in the block copolymer (c) in the amount specified in the present invention to form a specific dispersed phase. For example, to disperse the acrylic polymer block (c2) in a cylindrical phase having a short length, the ratio of the die lip opening (Dr) to the thickness of the molded article (Dt), Dr /Dt, in the T-die extrusion method is preferably in the range of $1 \leq Dr/Dt \leq 20$, and more preferably $3 \leq Dr/Dt \leq 10$. When Dr/Dt is less than 1, the block copolymer (c) becomes a spherical phase with a large dispersed particle diameter and whitens when stressed. On the other hand, if Dr/Dt exceeds 20, the block copolymer (c) becomes a cylindrical phase with a long length, which whitens when stressed, and its anisotropy becomes large.

When the film is produced using a T-die, the shear rate applied during die ejection is preferably in the range of 200 to 650/s, and more preferably in the range of 300 to 550/s. If the shear rate is less than 200/s, the shear applied to the block copolymer is small and the dispersed particle size becomes large, resulting in whitening. On the other hand, if the shear rate exceeds 650/s, the block copolymer is strongly sheared, resulting in a dispersed particle size of 1 nm or less, and the bendability of the molded article is not exhibited.

The methacrylic resin molded article, in particular, the film, can be used by laminating the film on metal or plastic. Examples of lamination methods include wet lamination in which an adhesive is applied to a metal plate, such as a steel plate, and then the film is placed on the metal plate and dried so as to bond the film and the metal plate together; dry lamination; extrusion lamination; hot melt lamination; and the like.

Examples of methods for laminating the film onto a plastic part include film insert molding or laminate injection press molding in which the film is placed in a mold and then a resin is injected into the mold; film in-mold molding in which a film molded beforehand is placed in a mold and the mold is then filled with a resin by injection molding; and the like.

The melt-extrusion film comprising the methacrylic resin composition of the present invention can be formed into a laminated film by further lamination of a functional layer or a thermoplastic resin film on the film.

When the molded article of the present invention is a methacrylic melt-extrusion film, the methacrylic melt-extrusion film and a functional layer can be layered to form a laminated film. The functional layer can be formed on one or both sides of the film. Examples of functional layers include hard coat layers, anti-glare layers, anti-reflective layers, anti-static layers, and the like. The molded article can comprise at least one of these layers.

When the methacrylic melt-extrusion film comprising the methacrylic resin composition of the present invention is a laminated film comprising a functional layer and the film, the functional layer preferably has a thickness of 0.1 to 20 μm, and more and preferably 1 to 10 μm. The laminated film preferably has a thickness of 20 to 220 μm, and more preferably 30 to 110 μm.

When the molded article of the present invention is a methacrylic melt-extrusion film, the methacrylic melt-extrusion film and a thermoplastic resin film can be layered to form a laminated film. The thermoplastic resin film can be formed on one or both sides of the methacrylic melt-extrusion film. Examples of thermoplastic resins of the thermoplastic resin film include various thermoplastic resins, such as polyolefins (polyethylene, polypropylene, polymethylpentene, etc.), polystyrene, polycarbonate, polyvinyl chloride, methacrylic resins, nylon, and polyethylene terephthalate; copolymers having a plurality of monomer units that constitute these thermoplastic resins; and the like. The thermoplastic resin film may comprise only one thermoplastic resin, or two or more thermoplastic resins.

When the film is a laminated film comprising the methacrylic melt-extruded film of the present invention and a

thermoplastic film, the thermoplastic film preferably has a thickness of 20 to 200 μm, and more preferably 30 to 100 μm. The methacrylic melt-extruded film preferably has a thickness of 5 to 100 μm, and more preferably 10 to 15 μm.

The methacrylic resin molded article comprising the resin composition of the present invention can be used as parts for various applications. Specific examples of the applications include sign parts, such as advertising pillars, stand signs, side signs, transom signs, and roof signs; marking films; display parts, such as showcases, partition panels, and store displays; illumination parts, such as fluorescent lamp covers, mood lighting covers, lamp shades, luminous ceilings, luminous walls, and chandeliers; interior parts, such as furniture, pendants, and mirrors; architectural parts, such as doors, domes, safety window glass, partitions, stair baseboards, balcony baseboards, and leisure building roofs; transportation-related parts such as airplane windshields, pilot visors, motorcycle and motorboat windshields, bus sun visors, automobile side visors, rear visors, head wings, headlight covers, sunroofs, glazing, interior automobile parts, and exterior automobile parts such as bumpers; electronic equipment parts, such as faceplates for audiovisual equipment, stereo covers, television protection masks, and vending machine display covers; medical equipment parts, such as incubators and X-ray parts; instrument-related parts, such as machine covers, instrument covers, experiment devices, rulers, dials, and observation windows; optics-related parts, such as liquid crystal protection plates, light guide plates, light guide films, Fresnel lenses, lenticular lenses, front panels of various displays, and diffusion plates; traffic parts, such as road signs, direction boards, mirrors on curved roads, and sound-insulating walls; in addition, greenhouses, large water tanks, box water tanks, bathroom parts, clock panels, bathtubs, sanitary articles, desk mats, parts of recreational devices, toys, face protection masks for welding, solar cell back sheets, and flexible-solar-cell front sheets; surface materials for use in computers, cellular phones, furniture, vending machines, bathroom parts, etc.; and the like.

On the other hand, the methacrylic resin molded article of the present invention, in particular, a laminate comprising the methacrylic resin film, can be used for interior or exterior materials for automobiles, daily goods, wallpaper, painting alternatives, housings for furniture and electric devices, housings for office equipment such as fax machines, floor materials, parts of electric or electronic devices, bathroom equipment, and the like.

As explained above, the methacrylic resin molded article of the present invention comprises a methacrylic resin (A), a multilayered polymer particle (b1), a multilayered polymer particle (b2), and a block copolymer (c), and the compositions of these components are set within specific ranges to control their dispersed state, whereby the obtained methacrylic molded article can have excellent transparency, surface smoothness, resistance to whitening on bending, surface hardness, and bendability, and is suitable for use in decoration and for use as building materials.

## Examples

The effect of the present invention is explained below with reference to Examples and Comparative Examples. The present invention is not limited to the following Examples. In the descriptions below, the term "parts" refers to parts by mass, and the term "%" refers to mass% unless otherwise specified.

Methacrylic resin molded articles (films) comprising the methacrylic resin composition of the present invention were evaluated by the following methods.

### Number Average Particle Size of Rubber Component Layer (b1-1) and Rubber Component Layer (b2-1)

Cross-sectional segments (thickness: 50 nm), the planes of which were parallel to the extrusion direction, were prepared from the films produced in the Examples and Comparative Examples (thickness: 75 μm), described later, by using an ultramicrotome (Leica EM UC7rt; produced by JEOL Ltd.). The prepared segments were subjected to electron staining with a 10% aqueous solution of phosphotungstic acid, and the shape of the stained portions (morphology) was observed with an electronic microscope (main unit: JSM-7600F, detector: SM-74240RTED; produced by JEOL Ltd). With respect to the observed spherical stained portions, the number average particle size of 30 particles of each segments was measured and determined to be the average particle size of a rubber component layer (b1).

### Acetone-insoluble Matter

2 g (mass of solids content before separation) of each prepared film (thickness: 75 μm) was added to 50 mL of acetone, and the resulting mixture was stirred at room temperature for 24 hours. The entire amount of the obtained liquid was centrifuged with a centrifugal machine (CR20GIII; produced by Hitachi Koki Co., Ltd.) at a rotation speed of 20000 rpm and at a temperature of 0°C for 180 minutes. The supernatant and the precipitate were separately obtained, and each was individually dried in a vacuum at 50°C for 8 hours to obtain acetone-soluble matter and acetone-insoluble matter. The mass of the obtained precipitate was measured, and the proportion of the acetone-insoluble matter was determined according to the following formula.

$$\text{Acetone-insoluble matter (\%)} = [(\text{Mass of precipitate})/(\text{Mass of solids content before separation})] \times 100$$

Haze

A resin film (thickness: 75 μm) was cut to 50 mm × 50 mm to prepare a test specimen. The haze was measured at 23°C in accordance with JIS K7105 and evaluated according to the following criteria.

A: 0.5% or less
B: 0.5% to 1.0%
C: 1.0% or more

Δhaze before and after Heating

A resin film (thickness: 75 μm) was cut to 100 mm × 100 mm to prepare a test specimen and heated in a desktop molding machine set to 140°C for 10 seconds. The haze of the sample immediately after heating was measured. The difference between the measured haze value and the haze value before heating was calculated as Δhaze and evaluated according to the following criteria.

A: 0.5% or less
B: more than 0.5% and less than 1.0%
C: 1.0% or more

Surface Hardness of Film

A resin film (75 μm) was cut to 10 cm × 10 cm to prepare a test specimen. The pencil hardness was measured in accordance with JIS K5600-5-4 and evaluated according to the following criteria.

A: HB or more
C: B or less

Crack Resistance of Film

A resin film (75 μm) was cut to 12 cm x 1.5 cm to prepare a test specimen. The number of MIT folds was measured in accordance with JIS-P-8115 and evaluated according to the following criteria.

A: >100
B: 40 to 100
C: <40

Slidability

The multilayer films obtained in the Examples and Comparative Examples were each cut to 50 mm x 50 mm and used as test specimens. Two sheets of each test specimen were prepared and rubbed together by hand in such a manner that the thermoplastic resin layer of one test specimen was in contact with the easily slidable layer of the other test specimen, the feel in contact was evaluated as follows. The films ranked as B or higher according to the evaluation criteria can be put into practical use.

A: The film slides without being caught.
B: The film is slightly caught but slides.
C: The film is caught and does not slide.

Production Example 1: Multilayered Polymer Particle (b1)

100 parts of ion-exchanged water were placed in a glass-lined reactor equipped with a condenser, a thermometer, and a stirrer, and then 0.019 parts of a surfactant (sodium polyoxyethylene alkyl ether acetate (NIKKOL-ECT-3NEX)) and 0.10 parts of sodium carbonate were added and dissolved. The atmosphere inside the reactor was replaced with nitrogen gas to make it substantially oxygen-free. The reactor was then heated to make the aqueous solution reach 80°C.

0.04 parts of potassium persulfate were added to the aqueous solution, and a mixture c composed of 32.6 parts of methyl methacrylate, 2.1 parts of methyl acrylate, and 0.07 parts of allyl methacrylate was further added over a period of 50

minutes without interruption. After the addition of the mixture c was completed, the resulting mixture was maintained for 40 minutes, followed by emulsion polymerization, thereby obtaining a latex c.

Subsequently, 0.05 parts of potassium persulfate were added to the latex c, and a mixture i composed of 36.6 parts of butyl acrylate, 7.9 parts of styrene, and 0.89 parts of allyl methacrylate was further added over a period of 60 minutes without interruption. After the addition of the mixture i was completed, the resulting mixture was maintained for 90 minutes, followed by seeded emulsion polymerization, thereby obtaining a latex i.

Subsequently, 0.02 parts of potassium persulfate were added to the latex i, and a mixture o composed of 18.6 parts of methyl methacrylate, 1.2 parts of methyl acrylate, and 0.04 parts of n-octyl mercaptan was further added over a period of 30 minutes without interruption. After the addition of the mixture o was completed, the resulting mixture was maintained for 60 minutes, followed by seeded emulsion polymerization, thereby obtaining a latex I-1. After the latex I-1 was placed in a vessel equipped with a stirrer and mixed, an aqueous solution of magnesium sulfate was added, and the mixture was salted out and solidified. The solidified product was washed with water and dehydrated, followed by drying, thereby obtaining a multilayered polymer particle (b1). Table 1 shows physical properties of the multilayered polymer particle (b1).

Production Example 2: Multilayered Polymer Particle (b2)

100 parts of ion-exchanged water were placed in a glass-lined reactor equipped with a condenser, a thermometer, and a stirrer, and then 0.019 parts of a surfactant (Pelex SS-H; produced by Kao Corporation) and 0.5 parts of sodium carbonate were added and dissolved. The atmosphere inside the reactor was replaced with nitrogen gas to make it substantially oxygen-free. The reactor was then heated to make the aqueous solution reach 80°C.

0.02 parts of potassium persulfate were added to the aqueous solution, and a mixture c composed of 9.4 parts of methyl methacrylate, 0.6 parts of methyl acrylate, and 0.02 parts of allyl methacrylate was further added over a period of 20 minutes without interruption. After the addition of the mixture c was completed, the resulting mixture was maintained for 30 minutes, followed by emulsion polymerization, thereby obtaining a latex c.

Subsequently, 0.07 parts of potassium persulfate were added to the latex c, and a mixture i composed of 41.1 parts of butyl acrylate, 8.9 parts of styrene, and 2.0 parts of allyl methacrylate was added over a period of 80 minutes without interruption. After the addition of the mixture i was completed, the resulting mixture was maintained for 60 minutes, followed by seeded emulsion polymerization, thereby obtaining a latex i.

Subsequently, a mixture o composed of 37.6 parts of methyl methacrylate, 2.4 parts of methyl acrylate, and 0.12 parts of n-octyl mercaptan was further added to the latex I over a period of 60 minutes without interruption. After the addition of the mixture o was completed, the resulting mixture was maintained for 60 minutes, followed by seeded emulsion polymerization, thereby obtaining a latex I-2. After the latex I-2 was placed in a vessel equipped with a stirrer and mixed, an aqueous solution of magnesium sulfate was added, and the resulting mixture was salted out and solidified. The solidified product was washed with water and dehydrated, followed by drying, thereby obtaining a multilayered polymer particle (b2). Table 1 shows the physical properties of the multilayered polymer particle (b2).

Table 1

| | | Production Example 1 | Production Example 2 |
|---|---|---|---|
| | | Multilayered polymer particle (b1) | Multilayered polymer particle (b2) |
| Layer composition | First layer (resin component layer (Ia)) (mass ratio) | MMA/MA/ALMA (94/6/0.2) | MMA/MA/ALMA (94/6/0.2) |
| | Second layer (rubber component layer (Ib)) (mass ratio) | BA/St/ALMA (82/18/2) | BA/St/ALMA (82/18/2) |
| | Third layer (thermoplastic resin component layer (II)) (mass ratio) | MMA/MA (95.0/5.0) | MMA/MA (95.0/5.0) |
| Layer ratio | | 10/50/40 | 35/45/20 |
| Weight average molecular weight of the outermost layer | | 63000 | 62000 |
| Volume average particle size up to the Second layer (μm) | | 0.09 | 0.21 |
| Volume average particle size up to the Third layer (μm) | | 0.11 | 0.23 |

Production Example 3: Methacrylic Resin (A1)

Methacrylic Resin (A1): A methacrylic copolymer composed of a methyl methacrylate (MMA) unit (content: 99.3 mass%) and a methyl acrylate (MA) unit (content: 0.7 mass%) with Mw of 84,000 and Mw/Mn of 2.1 was produced in accordance with an ordinary method.

Production Example 4: Methacrylic Resin (A2)

Methacrylic Resin (A2): A methacrylic copolymer composed of a methyl methacrylate (MMA) unit (content: 93.6 mass%) and a methyl acrylate (MA) unit (6.4 mass%) with Mw of 120,000 and Mw/Mn of 2.1 was produced in accordance with an ordinary method.

Production Example 5: Block Copolymer (C1)

Block Copolymer (C1): A triblock copolymer composed of [methyl methacrylate (MMA) polymer block (c1-1)]-[n-butyl acrylate (BA) polymer block (c2)]-[methyl methacrylate (MMA) polymer block (c1-2)] with a weight average molecular weight (Mw) of 70,000, a polymer block mass ratio (c1-1): (c2): (c1-2) of 14.3:50.0:35.7, and a total mass ratio of each monomer (MMA:BA) of 50:50 was produced in accordance with an ordinary method.

Production Example 6: Block Copolymer (C2)

Block Copolymer (C2): A triblock copolymer composed of [methyl methacrylate (MMA) polymer block (c1-1)]-[n-butyl acrylate (BA) polymer block (c2)]-[methyl methacrylate (MMA) polymer block (c1-2)] with a weight average molecular weight (Mw) of 65,000, a total mass ratio of each polymer block (c1-1:c2:c1-2) of 15:70:15, and a mass ratio of each monomer (MMA:BA) of 30:70 was produced in accordance with an ordinary method.

Production Example 7: Block Copolymer (C3)

Block Copolymer (C3): A diblock copolymer composed of [methyl methacrylate (MMA) polymer block (c1)]-[n-butyl acrylate (BA) copolymer block (c2)] with a weight average molecular weight (Mw) of 120,000, a polymer block mass ratio (c1): (c2) of 50:50, a mass ratio of each monomer (MMA:BA) of 50:50, Mw (c1) of 60,000, and Mw (c2) of 60,000 was produced in accordance with an ordinary method.

Example 1

56.2 parts of pellets of the methacrylic resin (A2), 42.3 parts of pellets of the multilayered polymer particle (b1), 0.5 parts of pellets of the multilayered polymer particle (b2), and 1 part of pellets of the block copolymer (C1) were kneaded with a twin-screw extruder and formed into pellets with a pelletizer to thereby obtain a methacrylic resin composition (R1) .

The methacrylic resin composition (R1) was melt-extruded by using a single-screw vented extruder (screw diameter: 50 mm) and a T-die (width: 500 mm; lip aperture: 0.8 mm) at a discharge rate of 10 kg/h and at a resin temperature of 260°C to thereby obtain a melt in a film form. Subsequently, the melt was pressed under a linear pressure of 30 kg/cm with a first nip roll formed of a mirror-finished elastic metal roll adjusted to 85°C and a mirror-finished rigid metal roll adjusted to 90°C (spacing between the rolls: 50 μm), and then pressed under a linear pressure of 30 kg/cm with a second nip roll formed of a mirror-finished rigid metal roll adjusted to 90°C and a mirror-finished rigid metal roll adjusted to 85°C (spacing between the rolls: 50 μm) to thereby obtain a monolayered resin film (1) with a thickness of 75 μm. The number average particle size of the rubber component layer b1 of the multilayered polymer particle as determined by electron microscopy was 0.09 μm and that of the rubber component layer b2 was 0.21 μm.

Table 2 below shows the evaluation results of the obtained resin film (1). The resin film (1) was slightly inferior in crack resistance and slidability but had excellent transparency and surface hardness.

Example 2

A resin film (2) was obtained in the same manner as in Example 1 except that 56.2 parts of the methacrylic resin (A1) were used in place of the methacrylic resin (A2), and 37.8 parts of pellets of the multilayered polymer particle (b), 2 parts of pellets of the multilayered polymer particle (b2), and 4 parts of pellets of the block copolymer (C1) were used. Table 2 shows the evaluation results. The resin film (2) had excellent transparency, surface hardness, crack resistance, and slidability.

Example 3

A resin film (3) was obtained in the same manner as in Example 1 except that 56.2 parts of pellets of the methacrylic resin (A2), 37.8 parts of pellets of the multilayered polymer particle (b1), 2 parts of pellets of the multilayered polymer particle (b2), and 4 parts of pellets of the block copolymer (C1) were used. Table 2 shows the evaluation results. The resin film (3) had excellent transparency, surface hardness, crack resistance, and slidability.

Example 4

A resin film (4) was obtained in the same manner as in Example 1 except that 37.8 parts of pellets of the multilayered polymer particle (b1), 2 parts of pellets of the multilayered polymer particle (b2), and 4 parts of pellets of the block copolymer (C2) were used. Table 2 shows the evaluation results. The resin film (4) had excellent transparency, surface hardness, crack resistance, and slidability.

Example 5

A resin film (5) was obtained in the same manner as in Example 1 except that 37.8 parts of pellets of the multilayered polymer particle (b1), 2 parts of pellets of the multilayered polymer particle (b2), and 4 parts of pellets of the block copolymer (C3) were used. Table 2 shows the evaluation results. The resin film (5) had excellent transparency, surface hardness, crack resistance, and slidability.

Example 6

A resin film (6) was obtained in the same manner as in Example 1 except that 39.8 parts of pellets of the multilayered polymer particle (b1), 4.5 parts of pellets of the multilayered polymer particle (b2), and 4.5 parts of pellets of the block copolymer (C1) were used. Table 2 shows the evaluation results. The resin film (6) had excellent transparency, surface hardness, crack resistance, and slidability.

Example 7

A resin film (7) was obtained in the same manner as in Example 1 except that 64 parts of pellets of the methacrylic resin (A2), 30 parts of pellets of the multilayered polymer particle (b1), 2 parts of pellets of the multilayered polymer particle (b2), and 4 parts of pellets of the block copolymer (C1) were used. Table 2 shows the evaluation results. The resin film (7) had excellent transparency, surface hardness, crack resistance, and slidability.

Example 8

A resin film (8) was obtained in the same manner as in Example 1 except that 70 parts of pellets of the methacrylic resin (A2), 24 parts of pellets of the multilayered polymer particle (b1), 2 parts of pellets of the multilayered polymer particle (b2), and 4 parts of pellets of the block copolymer (C1) were used. Table 2 shows the evaluation results. The resin film (8) was slightly inferior in crack resistance but had excellent transparency, surface hardness, and slidability.

Comparative Example 1

A resin film (9) was obtained in the same manner as in Example 1 except that 39.75 parts of pellets of the multilayered polymer particle (b1), 0.05 parts of pellets of the multilayered polymer particle (b2), and 4 parts of pellets of the block copolymer (C1) were used. Table 2 shows the evaluation results. The resin film (9) had reduced crack resistance and reduced slidability.

Comparative Example 2

A resin film (10) was obtained in the same manner as in Example 1 except that 31.8 parts of pellets of the multilayered polymer particle (b1), 8 parts of pellets of the multilayered polymer particle (b2), and 4 parts of pellets of the block copolymer (C1) were used. Table 2 shows the evaluation results. The resin film (10) had high haze and whitening on bending.

Comparative Example 3

A resin film (11) was obtained in the same manner as in Example 1 except that 41.75 parts of pellets of the multilayered polymer particle (b1), 2 parts of pellets of the multilayered polymer particle (b2), and 0.05 parts of pellets of the block copolymer (C1) were used. Table 2 shows the evaluation results. The resin film (11) had excellent crack resistance and slidability but had reduced crack resistance.

Comparative Example 4

A resin film (12) was obtained in the same manner as in Example 1 except that 33.8 parts of pellets of the multilayered polymer particle (b1), 2 parts of pellets of the multilayered polymer particle (b2), and 8 parts of pellets of the block copolymer (C1) were used. Table 2 shows the evaluation results. The resin film (12) had reduced pencil hardness.

Comparative Example 5

A resin film (13) was obtained in the same manner as in Example 1 except that 44 parts of pellets of the methacrylic resin (A2), 50 parts of pellets of the multilayered polymer particle (b1), 2 parts of pellets of the multilayered polymer particle (b2), and 4 parts of pellets of the block copolymer (C1) were used. Table 2 shows the evaluation results. The resin film (13) had excellent crack resistance and slidability but had high haze and whitening on bending.

Comparative Example 6

A resin film (14) was obtained in the same manner as in Example 1 except that 79 parts of pellets of the methacrylic resin (A2), 15 parts of pellets of the multilayered polymer particle (b1), 2 parts of pellets of the multilayered polymer particle (b2), and 4 parts of pellets of the block copolymer (C1) were used. Table 2 shows the evaluation results. The resin film (14) had reduced crack resistance.

Comparative Example 7

A resin film (15) was obtained in the same manner as in Example 1 except that 54.8 parts of pellets of the methacrylic resin (A2), 37.2 parts of pellets of the multilayered polymer particle (b1), 0 parts of pellets of the multilayered polymer particle (b2), and 8 parts of pellets of the block copolymer (C2) were used. Table 2 shows the evaluation results. The resin film (15) had reduced slidability and whitening on bending was observed.

Comparative Example 8

A resin film (16) was obtained in the same manner as in Example 1 except that 52.8 parts of pellets of the methacrylic resin (A2), 37.2 parts of pellets of the multilayered polymer particle (b1), 10 parts of pellets of the multilayered polymer particle (b2), and 0 parts of pellets of the block copolymer (C2) were used. Table 2 shows the evaluation results. The resin film (16) had whitening on bending.

Table 2

| | | | | Ex. 1 | Ex. 2 | Ex. 3 | Ex. 4 | Ex. 5 | Ex. 6 | Ex. 7 | Ex. 8 | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 |
|---|---|---|---|---|---|---|---|---|---|---|---|---|---|---|---|---|---|---|---|
| | | | | R1 | R2 | R3 | R4 | R5 | R6 | R7 | R8 | R9 | R10 | R11 | R12 | R13 | R14 | R15 | R16 |
| Mixing ratio of methacrylic resin composition | Methacrylic resin (A) | | A1 | | 56.2 | | | | | | | | | | | | | | |
| | | | A2 | 56.2 | | 56.2 | 56.2 | 56.2 | 56.2 | 64 | 70 | 56.2 | 56.2 | 56.2 | 56.2 | 44 | 79 | 54.8 | 52.8 |
| | Rubber elastomer (B) | Multilayered polymer particles | b1 | 42.3 | 37.8 | 37.8 | 37.8 | 37.8 | 39.8 | 30 | 24 | 39.75 | 31.8 | 41.75 | 33.8 | 50 | 15 | 37.2 | 37.2 |
| | | | b2 | 0.5 | 2 | 2 | 2 | 2 | 4.5 | 2 | 2 | 0.05 | 8 | 2 | 2 | 2 | 2 | | 10 |
| | | Block copolymer | C1 | 1 | 4 | 4 | | | 4.5 | 4 | 4 | 4 | 4 | 0.05 | 8 | 4 | 4 | 8 | |
| | | | C2 | | | | 4 | | | | | | | | | | | | |
| | | | C3 | | | | | 4 | | | | | | | | | | | |
| Rubber component content of the multilayered polymer particle | b1 | | | 25.4 | 22.7 | 22.7 | 22.7 | 22.7 | 23.9 | 18.0 | 14.4 | 23.9 | 19.1 | 25.1 | 20.3 | 30.0 | 9.0 | 22.3 | 22.3 |
| | b2 | | | 0.4 | 1.6 | 1.6 | 1.6 | 1.6 | 3.6 | 1.6 | 1.6 | 0.04 | 6.4 | 1.6 | 1.6 | 1.6 | 1.6 | - | 8.0 |
| Acetone insoluble matter (%) | | | | 41.1 | 38.4 | 38.4 | 38.4 | 38.4 | 42.9 | 30.9 | 25.1 | 38.2 | 38.9 | 42.2 | 34.6 | 50.1 | 16.5 | 35.7 | 46.2 |
| Evaluation items | Haze (%) | | | B | B | B | B | B | B | B | B | B | C | B | B | C | B | B | C |
| | ΔHaze (%) before and after heating | | | B | B | B | B | B | B | B | B | B | C | B | B | B | B | B | C |
| | Pencil hardness | | | B | B | B | B | B | B | B | B | B | B | B | D | D | B | D | B |
| | Whitening on bending at 180° | | | TP | TP | TP | TP | TP | TP | TP | TP | TP | WT | TP | WT | TP | TP | WT | WT |
| | Crack resistance | | | B | A | A | A | A | A | A | B | B | A | D | A | A | D | A | B |
| | Slidability | | | B | A | A | A | A | A | A | A | D | A | A | A | A | A | D | A |

TP: Transparent
WT: Whitening

The results above show that the acrylic resin composition according to the present invention is excellent in transparency, surface hardness, slidability, moldability, and appearance after molding, and is suitable for use in decoration.

## Claims

1. A methacrylic resin composition comprising a matrix of a methacrylic resin (A) and a rubber elastomer (B) dispersed in the matrix,
   the methacrylic resin composition having the following features when the total of the methacrylic resin (A) and the rubber elastomer (B) is defined as 100 mass%:

   (1) the rubber elastomer (B) comprises a multilayered polymer particle (b1), a multilayered polymer particle (b2), and a block copolymer (c);
   (2) the multilayered polymer particle (b1) comprises at least one rubber component layer (b1-1) (a core portion) and further comprises a hard resin component layer (b1-2) in the outermost part (a shell portion), the rubber component layer that is the closest to the shell portion has a number average particle size, determined as set out in the description, within the range of 0.05 μm or more and less than 0.16 μm, and the content of the multilayered polymer particle (b1) in the resin composition is more than 7.5 mass% and 42.5 mass% or less;
   (3) the multilayered polymer particle (b2) comprises at least one rubber component layer (b2-1) (a core portion) and further comprises a hard resin component layer (b2-2) in the outermost part (a shell portion), the rubber component layer that is the closest to the shell portion has a number average particle size, determined as set out in the description, within the range of 0.16 μm or more and 0.3 μm or less, and the content of the multilayered polymer particle (b2) in the resin composition is 0.1 mass% or more and 7.5 mass% or less;
   (4) the acetone-insoluble matter content of the methacrylic resin composition is more than 20 mass% and 45 mass% or less;
   (5) the block copolymer (c) comprises a methacrylic polymer block (c1) and an acrylic polymer block (c2); and
   (6) the content of the block copolymer (c) in the methacrylic resin composition is in the range of 0.1 mass% or more and less than 5 mass%.

2. The methacrylic resin composition according to claim 1, wherein the multilayered polymer particle (b1) contains at least one rubber component layer (b1-1) between the innermost layer and the outermost layer, the rubber component layer (b1-1) comprises a copolymer of 50 to 98.99 mass% of an acrylic acid ester monomer unit, 1 to 44.99 mass% of an additional monofunctional monomer unit, and 0.01 to 10 mass% of a polyfunctional monomer unit, and the innermost layer and the outermost layer are each at least one hard resin component layer (b1-2) comprising 40 to 100 mass% of a methacrylic acid ester monomer unit and 60 to 0 mass% of an additional monomer unit.

3. The methacrylic resin composition according to claim 1, wherein the multilayered polymer particle (b2) contains at least one rubber component layer (b2-1) between the innermost layer and the outermost layer, the rubber component layer (b2-1) comprises a copolymer of 50 to 98.99 mass% of an acrylic acid ester monomer unit, 1 to 44.99 mass% of an additional monofunctional monomer unit, and 0.01 to 10 mass% of a polyfunctional monomer unit, and the innermost layer and the outermost layer are each at least one hard resin component layer (b2-2) comprising 40 to 100 mass% of a methacrylic acid ester monomer unit and 60 to 0 mass% of an additional monomer unit.

4. The methacrylic resin composition according to any one of claims 1 to 3, wherein the block copolymer (c) comprises at least one methacrylic polymer block (c1) and at least one acrylic polymer block (c2), and the block copolymer (c) contains the methacrylic polymer block (c1) in an amount of 30 to 60 mass% and the acrylic polymer block (c2) in an amount of 70 to 40 mass%.

5. A molded article comprising the methacrylic resin composition of any one of claims 1 to 4.

6. The molded article according to claim 5, which is a film.

7. A method for producing a film, the method comprising subjecting the methacrylic resin composition of any one of claims 1 to 4 to melt extrusion or solution casting.

## Patentansprüche

**1.** Methacrylharzzusammensetzung, umfassend eine Matrix aus einem Methacrylharz (A) und ein in der Matrix dispergiertes Kautschukelastomer (B), wobei die Methacrylharzzusammensetzung die folgenden Merkmale aufweist, wenn die Gesamtmenge des Methacrylharzes (A) und des Kautschukelastomers (B) als 100 Massen-% definiert ist:

(1) das Kautschukelastomer (B) umfasst ein mehrschichtiges Polymerteilchen (b1), ein mehrschichtiges Polymerteilchen (b2) und ein Blockcopolymer (c);
(2) das mehrschichtige Polymerteilchen (b1) umfasst mindestens eine Kautschukkomponentenschicht (b1-1) (einen Kernbereich) und umfasst weiter eine Hartharzkomponentenschicht (b1-2) in dem äußersten Teil (einen Mantelbereich), die Kautschukkomponentenschicht, die dem Mantelbereich am nächsten ist, weist eine zahlengemittelte Teilchengröße, bestimmt wie in der Beschreibung angegeben, in dem Bereich von 0,05 μm oder mehr und weniger als 0,16 μm auf und der Gehalt des mehrschichtigen Polymerteilchens (b1) in der Harzzusammensetzung beträgt mehr als 7,5 Massen-% und 42,5 Massen-% oder weniger;
(3) das mehrschichtige Polymerteilchen (b2) umfasst mindestens eine Kautschukkomponentenschicht (b2-1) (einen Kernbereich) und umfasst weiter eine Hartharzkomponentenschicht (b2-2) in dem äußersten Teil (einen Mantelbereich), die Kautschukkomponentenschicht, die dem Mantelbereich am nächsten ist, weist eine zahlengemittelte Teilchengröße, bestimmt wie in der Beschreibung angegeben, in dem Bereich von 0,16 μm oder mehr und 0,3 μm oder weniger auf und der Gehalt des mehrschichtigen Polymerteilchens (b2) in der Harzzusammensetzung beträgt 0,1 Massen-% oder mehr und 7,5 Massen-% oder weniger;
(4) der Gehalt an in Aceton unlöslichen Stoffen der Methacrylharzzusammensetzung beträgt mehr als 20 Massen-% und 45 Massen-% oder weniger;
(5) das Blockcopolymer (c) umfasst einen Methacrylpolymerblock (c1) und einen Acrylpolymerblock (c2); und
(6) der Gehalt des Blockcopolymers (c) in der Methacrylharzzusammensetzung ist in dem Bereich von 0,1 Massen-% oder mehr und weniger als 5 Massen-%.

**2.** Methacrylharzzusammensetzung nach Anspruch 1, wobei das mehrschichtige Polymerteilchen (b1) mindestens eine Kautschukkomponentenschicht (b1-1) zwischen der innersten Schicht und der äußersten Schicht enthält, wobei die Kautschukkomponentenschicht (b1-1) ein Copolymer aus 50 bis 98,99 Massen-% einer Acrylsäureester-Monomereinheit, 1 bis 44,99 Massen-% einer zusätzlichen monofunktionellen Monomereinheit und 0,01 bis 10 Massen-% einer polyfunktionellen Monomereinheit umfasst, und die innerste Schicht und die äußerste Schicht jeweils mindestens eine Hartharzkomponentenschicht (b1-2) sind, die 40 bis 100 Massen-% einer Methacrylsäureester-Monomereinheit und 60 bis 0 Massen-% einer zusätzlichen Monomereinheit umfasst.

**3.** Methacrylharzzusammensetzung nach Anspruch 1, wobei das mehrschichtige Polymerteilchen (b2) mindestens eine Kautschukkomponentenschicht (b2-1) zwischen der innersten Schicht und der äußersten Schicht enthält, wobei die Kautschukkomponentenschicht (b2-1) ein Copolymer aus 50 bis 98,99 Massen-% einer Acrylsäureester-Monomereinheit, 1 bis 44,99 Massen-% einer zusätzlichen monofunktionellen Monomereinheit und 0,01 bis 10 Massen-% einer polyfunktionellen Monomereinheit umfasst, und die innerste Schicht und die äußerste Schicht jeweils mindestens eine Hartharzkomponentenschicht sind, die 40 bis 100 Massen-% einer Methacrylsäureester-Monomereinheit und 60 bis 0 Massen-% einer zusätzlichen Monomereinheit umfasst.

**4.** Methacrylharzzusammensetzung nach einem der Ansprüche 1 bis 3, wobei das Blockcopolymer (c) mindestens einen Methacrylpolymerblock (c1) und mindestens einen Acrylpolymerblock (c2) umfasst, und das Blockcopolymer (c) den Methacrylpolymerblock (c1) in einer Menge von 30 bis 60 Massen-% und den Acrylpolymerblock (c2) in einer Menge von 70 bis 40 Massen-% enthält.

**5.** Formgegenstand, umfassend die Methacrylharzzusammensetzung nach einem der Ansprüche 1 bis 4.

**6.** Formgegenstand nach Anspruch 5, der eine Folie ist.

**7.** Verfahren zur Herstellung einer Folie, wobei das Verfahren das Unterziehen der Methacrylharzzusammensetzung nach einem der Ansprüche 1 bis 4 einer Schmelzextrusion oder eines Lösungsgießens umfasst.

## Revendications

**1.** Composition de résine méthacrylique comprenant une matrice d'une résine méthacrylique (A) et d'un élastomère de caoutchouc (B) dispersés dans la matrice,
la composition de résine méthacrylique ayant les caractéristiques suivantes lorsque le total de la résine méthacrylique (A) et de l'élastomère de caoutchouc (B) est défini comme 100 % en masse :

(1) l'élastomère de caoutchouc (B) comprend une particule polymère multicouche (b1), une particule polymère multicouche (b2) et un copolymère à blocs (c) ;
(2) la particule polymère multicouche (b1) comprend au moins une couche de composant de caoutchouc (b1-1) (une portion de noyau) et comprend en outre une couche de composant de résine dure (b1-2) dans la partie la plus externe (une portion de coque), la couche de composant de caoutchouc qui est la plus proche de la portion de coque a une taille particulaire moyenne en nombre, déterminée tel qu'établi dans la description, au sein de la plage de 0,05 $\mu$m ou plus et moins de 0,16 $\mu$m, et la teneur en la particule polymère multicouche (b1) dans la composition de résine est supérieure à 7,5 % en masse et de 42,5 % en masse ou moins ;
(3) la particule polymère multicouche (b2) comprend au moins une couche de composant de caoutchouc (b2-1) (une portion de noyau) et comprend en outre une couche de composant de résine dure (b2-2) dans la partie la plus externe (une portion de coque), la couche de composant de caoutchouc qui est la plus proche de la portion de coque a une taille particulaire moyenne en nombre, déterminée tel qu'établi dans la description, au sein de la plage de 0,16 $\mu$m ou plus et de 0,3 $\mu$m ou moins, et la teneur en la particule polymère multicouche (b2) dans la composition de résine est de 0,1 % en masse ou plus et de 7,5 % en masse ou moins ;
(4) la teneur en matière insoluble dans l'acétone de la composition de résine méthacrylique est supérieure à 20 % en masse et de 45 % en masse ou moins ;
(5) le copolymère à blocs (c) comprend un bloc polymère méthacrylique (c1) et un bloc polymère acrylique (c2) ; et
(6) la teneur en le copolymère à blocs (c) dans la composition de résine méthacrylique est dans la plage de 0,1 % en masse ou plus et moins de 5 % en masse.

**2.** Composition de résine méthacrylique selon la revendication 1, dans laquelle la particule polymère multicouche (b1) contient au moins une couche de composant de caoutchouc (b1-1) entre la couche la plus interne et la couche la plus externe, la couche de composant de caoutchouc (b1-1) comprend un copolymère de 50 à 98,99 % en masse d'une unité monomère d'ester d'acide acrylique, 1 à 44,99 % en masse d'une unité monomère monofonctionnelle supplémentaire, et 0,01 à 10 % en masse d'une unité monomère polyfonctionnelle, et la couche la plus interne et la couche la plus externe sont chacune au moins une couche de composant de résine dure (b1-2) comprenant 40 à 100 % en masse d'une unité monomère d'ester d'acide méthacrylique et 60 à 0 % en masse d'une unité monomère supplémentaire.

**3.** Composition de résine méthacrylique selon la revendication 1, dans laquelle la particule polymère multicouche (b2) contient au moins une couche de composant de caoutchouc (b2-1) entre la couche la plus interne et la couche la plus externe, la couche de composant de caoutchouc (b2-1) comprend un copolymère de 50 à 98,99 % en masse d'une unité monomère d'ester d'acide acrylique, 1 à 44,99 % en masse d'une unité monomère monofonctionnelle supplémentaire, et 0,01 à 10 % en masse d'une unité monomère polyfonctionnelle, et la couche la plus interne et la couche la plus externe sont chacune au moins une couche de composant de résine dure (b2-2) comprenant 40 à 100 % en masse d'une unité monomère d'ester d'acide méthacrylique et 60 à 0 % en masse d'une unité monomère supplémentaire.

**4.** Composition de résine méthacrylique selon l'une quelconque des revendications 1 à 3, dans laquelle le copolymère à blocs (c) comprend au moins un bloc polymère méthacrylique (c1) et au moins un bloc polymère acrylique (c2), et le copolymère à blocs (c) contient le bloc polymère méthacrylique (c1) en une quantité de 30 à 60 % en masse et le bloc polymère acrylique (c2) en une quantité de 70 à 40 % en masse.

**5.** Article moulé comprenant la composition de résine méthacrylique selon l'une quelconque des revendications 1 à 4.

**6.** Article moulé selon la revendication 5, qui est un film.

**7.** Procédé de production d'un film, le procédé comprenant soumettre la composition de résine méthacrylique selon l'une quelconque des revendications 1 à 4 à une extrusion à l'état fondu ou un coulage en solution.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001316557 A
- WO 2016157908 A
- JP 2000290397 A
- WO 2013051239 A